# EUROPEAN PATENT APPLICATION

(11) **EP 4 752 193 A1**
(43) Date of publication of application: **03.06.2026**
(21) Application number: 24845668.3
(22) Date of filing: 25.07.2024
(51) Int. Cl.: C10G 69/06, C10B 53/07, C10G 1/10, C10G 9/36, C10G 45/32, C10G 47/00

(54) **METHOD FOR PRODUCING CHEMICAL PRODUCT AND CARBIDE, AND METHOD FOR MANAGING CHEMICAL PRODUCT**

(30) Priority: 26.07.2023 JP 2023122048
(71) Applicant: ENEOS CORPORATION, Chiyoda-ku Tokyo 100-8162 (JP); BRIDGESTONE CORPORATION, Chuo-ku Tokyo 104-8340 (JP)
(72) Inventor: KOBAYASHI, Masahide, Tokyo 100-8162 (JP); URUSHIZAKO, Naoko, Tokyo 100-8162 (JP); IWAMOTO, Rina, Tokyo 100-8162 (JP); KANI, Masaya, Tokyo 100-8162 (JP); HOJO, Masahiro, Tokyo 104-8340 (JP); TAHARA, Seiichi, Tokyo 104-8340 (JP); OKUNO, Akira, Tokyo 104-8340 (JP); KUNO ITODA, Marino, Tokyo 104-8340 (JP)
(74) Representative: Müller-Boré & Partner Patentanwälte PartG mbB
(86) International application number: PCT/JP2024/026603
(87) International publication number: WO 2025/023294

(57) **Abstract**

To provide a method which efficiently produces a chemical product and also efficiently provides a carbide from used tires by improvement of each step in a set of processes. A method for producing a chemical product and a carbide, the method including a pyrolysis step of obtaining a first gas fraction, pyrolysis oil, and a residue fraction through pyrolysis of a crushed product of used tires, a carbide recovery step of recovering carbide from the residue fraction, a low-temperature hydrogenation step of subjecting raw oil containing at least one portion of the pyrolysis oil to low-temperature hydrotreatment at 180°C or higher and 350°C or lower, to obtain low-temperature hydrogenated oil, a hydrogenolysis step of subjecting raw oil containing at least one portion of the low-temperature hydrogenated oil to hydrogenolysis treatment at a higher temperature than that in the low-temperature hydrotreatment, to obtain a second gas fraction, a light fraction having a boiling point of 350°C or lower, and a heavy fraction having a boiling point of higher than 350°C, and a steam cracking step of obtaining a chemical product, and a raw material for carbide production, containing a heavy distillate fraction having a 10% distillation temperature of 190°C or higher, by steam cracking of steam cracking raw oil containing at least one portion of the light fraction, in which a pyrolysis temperature of the pyrolysis is 350°C or higher and 750°C or lower.

## Description

### BACKGROUND OF THE INVENTION

### Field of the Invention

The present invention relates to a method for producing a chemical product and a carbide. The present invention relates to a method for managing a chemical product, to be executed with a management apparatus, for use in the production of a chemical product with used tires.

### Background Art

In recent years, conversion into chemical products through pyrolysis or the like has been studied as methods for reusing waste materials such as used tires, waste rubber, and waste plastics (for example, Patent Literature 1).

### Citation List

### Patent Literature

[Patent Literature 1] JP 2019-533041 A

### SUMMARY OF THE INVENTION

### Technical Problem

Various processes are desired to be developed in reuse of waste materials for the reason that, for example, the types, the qualities and the like of waste materials are not necessarily constant and processes utilizing existing facilities are demanded.

The present inventors have studied a set of processes including a pyrolysis step of obtaining pyrolysis oil through pyrolysis of used tires, a hydrogenolysis step of obtaining at least a light fraction by hydrotreatment of the pyrolysis oil, and a steam cracking step of subjecting the light fraction to steam cracking treatment to obtain a chemical product, in particular, in a method for producing a chemical product with used tires. A technical problem which has been found is that, when the pyrolysis oil is directly subjected to hydrotreatment in the set of processes, contamination (a by-product such as a polymerized product of hydrocarbon) is generated due to impurities such as diene contained in the pyrolysis oil, in the hydrogenolysis step.

An object of the present invention is to provide a method for not only efficiently producing a chemical product from used tires, but also efficiently obtaining a carbide, by improving each step in a set of processes. Another object of the present invention is to provide a method for managing a chemical product, to be executed with a management apparatus, for use in the production of a chemical product with used tires.

### Solution to Problem

The present inventors have made studies in order to solve the above problems, and as a result, have found that generation of contamination (a by-product such as a polymerized product of hydrocarbon) can be suppressed by improving the above set of processes and performing a low-temperature hydrogenation step of subjecting pyrolysis oil to low-temperature hydrotreatment to obtain low-temperature hydrogenated oil between a pyrolysis step and a hydrogenolysis step in a method for producing a chemical product with used tires. The present inventors have completed the present invention based on such findings.

One aspect of the present invention relates to, for example, the following.
[1] A method for producing a chemical product and a carbide, the method including
   a pyrolysis step of obtaining a first gas fraction, pyrolysis oil, and a residue fraction through pyrolysis of a crushed product of used tires,
   a carbide recovery step of recovering carbide from the residue fraction,
   a low-temperature hydrogenation step of subjecting raw oil containing at least one portion of the pyrolysis oil to low-temperature hydrotreatment at 180°C or higher and 350°C or lower, to obtain low-temperature hydrogenated oil,
   a hydrogenolysis step of subjecting raw oil containing at least one portion of the low-temperature hydrogenated oil to hydrogenolysis treatment at a higher temperature than that in the low-temperature hydrotreatment, to obtain a second gas fraction, a light fraction having a boiling point of 350°C or lower, and a heavy fraction having a boiling point of higher than 350°C, and
   a steam cracking step of obtaining a chemical product, and a raw material for carbide production, containing a heavy distillate fraction having a 10% distillation temperature of 190°C or higher, by steam cracking of steam cracking raw oil containing at least one portion of the light fraction, wherein
   a pyrolysis temperature of the pyrolysis is 350°C or higher and 750°C or lower.
[2] The production method according to [1], wherein an amount of the first gas fraction based on a total amount of the first gas fraction, the pyrolysis oil and the residue fraction is 25% by mass or lower in the pyrolysis step.
[3] The production method according to [1] or [2], wherein an amount of the pyrolysis oil based on a total amount of the first gas fraction, the pyrolysis oil and the residue fraction is 40% by mass or higher in the pyrolysis step.
[4] The production method according to any of [1] to [3], wherein the pyrolysis oil has a 10% distillation temperature of 90°C or higher and a 90% distillation temperature of 350°C or higher.
[5] The production method according to any of [1] to [4], wherein the raw oil in the hydrogenolysis step further contains at least one portion of the pyrolysis oil or one portion of the resulting pyrolysis oil (fractionally distilled pyrolysis oil) from fractional distillation of the pyrolysis oil.
[6] The production method according to any of [1] to [5], wherein the pyrolysis oil is used as one portion of raw oil in the low-temperature hydrogenation step after removal of at least one portion of high-boiling point oil having a boiling point of higher than 350°C by distillation.
[7] The production method according to any of [1] to [6], wherein, in the hydrogenolysis step, the raw oil contains low-boiling point oil having a boiling point of 350°C or lower and high-boiling point oil having a boiling point of higher than 350°C and a content of the high-boiling point oil is 50% by mass or lower based on a total amount of the raw oil.
[8] The production method according to any of [1] to [7], wherein recycled oil containing at least one portion of the light fraction and the heavy fraction obtained in the hydrogenolysis step is used as one portion of raw oil in the low-temperature hydrogenation step.
[9] The production method according to [8], wherein an amount of the recycled oil based on a total amount of the recycled oil and the pyrolysis oil in the raw oil is 10% by mass or higher and 99% by mass or lower in the low-temperature hydrogenation step.
[10] The production method according to any of [1] to [9], wherein the hydrogenolysis step is a step of hydrogenolyzing the raw oil in the presence of a hydrogenolysis catalyst.
[11] The production method according to [10], wherein the hydrogenolysis catalyst contains a Ni-based catalyst.
[12] The production method according to any of [1] to [11], wherein, in the hydrogenolysis step, a nitrogen fraction in the raw oil is 2000 ppm by mass or higher and a nitrogen fraction in the light fraction is 25 ppm by mass or lower.
[13] The production method according to any of [1] to [12], wherein a diene value of the low-temperature hydrogenated oil is lower than 13.0 gI₂/100 g.
[14] The production method according to any of [1] to [13], wherein an iodine value of the low-temperature hydrogenated oil is lower than 160 gI₂/100 g.
[15] The production method according to any of [1] to [14], wherein a total acid value of the low-temperature hydrogenated oil is lower than 5.0 mgKOH/g.
[16] The production method according to any of [1] to [15], wherein the chemical product is at least one selected from the group consisting of ethylene, propylene, butadiene, butenes, isoprene, benzene, toluene, xylene, ethylbenzene, styrene, cyclopentadiene, dicyclopentadiene, indene, and methylstyrene.
[17] The production method according to any of [1] to [16], further including a carbide production step of obtaining a carbide through pyrolysis or incomplete combustion of the raw material for carbide production.
[18] A method for producing synthetic rubber, the method including a polymerization step of obtaining synthetic rubber by a polymerization reaction in which butadiene obtained by the production method according to [16] is used as at least one portion of a raw material of the synthetic rubber.
[19] A tire including synthetic rubber obtained by the production method according to [18].
[20] A method for producing a tire, the method including a vulcanization step of obtaining a tire by a vulcanization reaction in which synthetic rubber obtained by the production method according to [18] is used as at least one portion of a raw material of the tire.
[21] A method for managing a chemical product, to be executed with a management apparatus, for use in the production of a chemical product with used tires, wherein
   the management method is a method for assigning a value as a renewable product with a mass balance system, to the chemical product, with the management apparatus depending on a content rate of a renewable raw material contained in the used tires,
   the management method includes a step (V) of confirming that the chemical product is obtained,
      the step (V) includes the following step (V-1), the following step (V-2), the following step (V-3), the following step (V-4), and the following step (V-5),
      the step (V-1) is a step of confirming that pyrolysis oil is produced from the used tires loaded to a pyrolysis unit in which the pyrolysis oil is obtained by subjecting the used tires to pyrolysis processing at 350°C or higher and 750°C or lower,
      the step (V-2) is a step of confirming that low-temperature hydrogenated oil is produced from the pyrolysis oil loaded to a low-temperature hydrogenation unit in which raw oil containing at least one portion of the pyrolysis oil is subjected to low-temperature hydrotreatment at 180°C or higher and 350°C or lower to obtain the low-temperature hydrogenated oil,
      the step (V-3) is a step of confirming that a light fraction having a boiling point of 350°C or lower is produced from the low-temperature hydrogenated oil loaded to a hydrogenolysis unit in which raw oil containing at least one portion of the low-temperature hydrogenated oil is subjected to hydrogenolysis treatment at a higher temperature than that in the low-temperature hydrotreatment to obtain the light fraction,
      the step (V-4) is a step of confirming that the chemical product is obtained from the light fraction loaded to a steam cracker in which steam cracking raw oil containing at least one portion of the light fraction is subjected to steam cracking treatment, and
      the step (V-5) is a step of confirming that the chemical product is obtained from the used tires by treatment in the order of the pyrolysis unit, the low-temperature hydrogenation unit, the hydrogenolysis unit, and the steam cracker,
   the management method includes a step (Z) of confirming a proportion of a product to which a value as a renewable product is assigned,
      the step (Z) includes the following step (Z-1), the following step (Z-2), the following step (Z-3), and the following step (Z-4),
      the step (Z-1) is a step of selecting a product to be assigned as a renewable product in a product obtained by the steam cracker,
      the step (Z-2) is a step of determining a value of proportion (P) to be assigned as a renewable product in a proportion of the product selected in the step (Z-1) relative to the product obtained by the steam cracker,
      the step (Z-3) is a step of grasping a value of content rate (Q) of a renewable raw material contained in the used tires, and
      the step (Z-4) is a step of confirming that the value of proportion (P) is equal to or lower than the value of content rate (Q) by comparing the value of proportion (P) and the value of content rate (Q).
[22] A management apparatus including a computer-readable storage medium storing a management program, wherein
   the management apparatus executes the management program to execute the management method according to [21].
[23] The management apparatus according to [22], wherein the management apparatus executes the management method and then outputs a result which is acquired by the management method and in which a value as a renewable product relative to a product selected depending on a content rate of a renewable raw material contained in used tires is assigned.
[24] A computer-readable storage medium storing a computer program, wherein
   the storage medium stores a management program which allows a computer to execute the management method according to [21].
[25] A management program for allowing a computer to execute the management method according to [21].

### Advantageous Effect of Invention

The present invention provides a method which efficiently produces a chemical product and also efficiently provides a carbide from used tires by improvement of each step in a set of processes. The present invention provides a method for managing a chemical product, to be executed with a management apparatus, for use in the production of a chemical product with used tires.

### BRIEF DESCRIPTION OF THE DRAWINGS

FIG. 1 is an outline drawing illustrating one example of a pyrolysis apparatus.
FIG. 2 is an outline drawing illustrating one example of a system for carrying out a method for producing a chemical product and a carbide.
FIG. 3 is an outline drawing for explaining a function configuration of a management apparatus.
FIG. 4 is a block diagram illustrating a hardware configuration of a management apparatus.
FIG. 5 is a flowchart illustrating one example of a processing procedure of a management program in a control section of a management apparatus.
FIG. 6 is a schematic view of a contamination evaluation tester (HLPS) used in Examples.

### DETAILED DESCRIPTION OF THE INVENTION

Hereinafter, suitable embodiments of the present invention are described in detail.

A method for producing a chemical product and a carbide of the present embodiment includes a pyrolysis step of obtaining a first gas fraction, pyrolysis oil, and a residue fraction through pyrolysis of a crushed product of used tires, a carbide recovery step of recovering carbide from the residue fraction, a low-temperature hydrogenation step of subjecting raw oil containing at least one portion of the pyrolysis oil to low-temperature hydrotreatment at 180°C or higher and 350°C or lower, to obtain low-temperature hydrogenated oil, a hydrogenolysis step of subjecting raw oil containing at least one portion of the low-temperature hydrogenated oil to hydrogenolysis treatment at a higher temperature than that in the low-temperature hydrotreatment, to obtain a second gas fraction, a light fraction having a boiling point of 350°C or lower, and a heavy fraction having a boiling point of higher than 350°C, and a steam cracking step of obtaining a chemical product, and a raw material for carbide production, containing a heavy distillate fraction having a 10% distillation temperature of 190°C or higher, by steam cracking of steam cracking raw oil containing at least one portion of the light fraction.

In the pyrolysis step in the present embodiment, the pyrolysis temperature of the pyrolysis is 350°C or higher and 750°C or lower.

In the method for producing a chemical product and a carbide of the present embodiment, used tires can be used and the above steps can be undergone, thereby efficiently producing a chemical product and also efficiently producing a powdery carbide applicable to an application, for example, an additive for rubber, an additive for resins, or a colorant.

Hereinafter, each step in the present invention is described in detail.

### (Pyrolysis step)

The pyrolysis step is a step of obtaining a first gas fraction, pyrolysis oil, and a residue fraction through pyrolysis of a crushed product of used tires (hereinafter, also simply referred to as waste material).

The used tires may contain a metal fraction. For example, the used tires may contain a metal fraction, for example, a steel cord or a wire being an aggregate for tires.

In a case where the used tires contain a metal fraction, the production method of the present embodiment may further include a removal step of removing the metal fraction from the used tires or their crushed products. The method for removing the metal fraction from the used tires or their crushed products is not particularly limited, and examples thereof include a method of removal with a magnet, a sieve, or the like.

The metal fraction in the used tires is not necessarily required to be removed before the pyrolysis step. For example, in a case where the used tires contain the metal fraction, a first gas fraction, pyrolysis oil, and a mixture of a residue fraction and the metal fraction are obtained in the pyrolysis step. The production method of the present embodiment may further include a removal step of removing the metal fraction from the mixture. The method for removing the metal fraction from the mixture is not particularly limited, and examples thereof include a method of removal with a magnet, a sieve, or the like.

The method for crushing the used tires is not particularly limited, and may be, for example, a method such as mechanical pulverization with a uniaxial pulverizer or a biaxial pulverizer, pulverization with water jet, freezing pulverization, or laser pulverization.

Pyrolysis of the crushed product of used tires can be performed by, for example, receiving the crushed product of used tires in a pyrolysis furnace, feeding a high-temperature gas to the pyrolysis furnace, and contacting the crushed product of used tires with the high-temperature gas. The high-temperature gas is preferably an oxygen-free gas containing substantially no oxygen (for example, a gas having a content of oxygen of 1% by volume or lower). The high-temperature gas may be any gas other than oxygen and oxide, and may be, for example, an inert gas such as nitrogen, argon or helium, hydrogen, or a hydrocarbon having 1 to 4 carbon atoms. The pyrolysis furnace is not particularly limited, and may be, for example, a boiler type pyrolysis furnace, a fluidized bed-type pyrolysis furnace, or a kiln type pyrolysis furnace.

The pyrolysis temperature (the temperature of the high-temperature gas) in the pyrolysis step may be, 350°C or higher, and is preferably 370°C or higher, more preferably 390°C or higher from the viewpoint of a more enhancement in chemical product yield, from the viewpoint of allowing a powdery carbide to be more easily obtained from a residue fraction, from the viewpoint of a more enhancement in dispersibility in addition of the resulting powdery carbide to a resin, an elastomer, or the like, and from the viewpoint of allowing a heavy distillate fraction obtained in the steam cracking step to be more suitable as a raw material for carbide production (in particular, a raw material for carbon black production). The pyrolysis temperature (the temperature of the high-temperature gas) in the pyrolysis step may be, for example, 750°C or lower, and is preferably 730°C or lower, more preferably 710°C or lower from the viewpoint of a more enhancement in chemical product yield, from the viewpoint of allowing a powdery carbide to be more easily obtained from a residue fraction, and from the viewpoint of allowing a heavy distillate fraction obtained in the steam cracking step to be more suitable as a raw material for carbide production (in particular, a raw material for carbon black production). Such a temperature range results in tendencies to allow suitable amounts of products (first gas fraction, pyrolysis oil and residue fraction) described later, to be satisfied, and to easily provide raw oil in which the content of high-boiling point oil is in a suitable range.

In other words, the pyrolysis temperature (the temperature of the high-temperature gas) in the pyrolysis step may be, for example, 350 to 750°C, 350 to 730°C, 350 to 710°C, 370 to 750°C, 370 to 730°C, 370 to 710°C, 390 to 750°C, 390 to 730°C or 390 to 710°C.

Pyrolysis may be carried out in the presence of a pyrolysis catalyst or may be carried out in the absence of a pyrolysis catalyst. The pyrolysis catalyst used here can be any catalyst to be used for usual petrochemical pyrolysis, without any particular limitation. The pyrolysis catalyst may be an acidic catalyst or a basic catalyst. Examples of the acidic catalyst include a catalyst containing aluminosilicate. Examples of the aluminosilicate include zeolite and those in a smectite group, such as montmorillonite. Examples of the catalyst containing montmorillonite include clay or minerals, such as activated earth, acid earth, and bentonite. The basic catalyst used here can be, for example, carbonate such as sodium carbonate.

Various conditions of pyrolysis may be appropriately adjusted so that, for example, the resulting component ratio, and properties of the resulting pyrolysis oil are in suitable ranges described later.

In the pyrolysis step, a first gas fraction, pyrolysis oil and a residue fraction are obtained. The residue fraction may also be obtained as a mixture with the metal fraction, as described above. In the pyrolysis step, for example, the pyrolysis oil can be recovered as an oil fraction by producing a pyrolysis gas in a pyrolysis furnace and cooling the pyrolysis gas. In the pyrolysis step, for example, the first gas fraction can be recovered as a residue gas after cooling of the pyrolysis gas and recovery of the oil fraction. In the pyrolysis step, for example, the residue fraction can be recovered as a solid fraction remaining in the pyrolysis furnace after pyrolysis.

In the pyrolysis step, the amount of the pyrolysis oil based on the total amount of the first gas fraction, the pyrolysis oil and the residue fraction may be, for example, 40% by mass or higher. In the pyrolysis step, the amount of the pyrolysis oil based on the total amount of the first gas fraction, the pyrolysis oil and the residue fraction is preferably 45% by mass or higher, more preferably 48% by mass or higher, further preferably 50% by mass or higher, or may be 51% by mass or higher or 52% by mass or higher from the viewpoint of an enhancement in yield of the chemical product obtained through the low-temperature hydrogenation step, the hydrogenolysis step and the steam cracking step. In the pyrolysis step, the amount of the pyrolysis oil based on the total amount of the first gas fraction, the pyrolysis oil and the residue fraction may be, for example, 80% by mass or lower, is preferably 75% by mass or lower, more preferably 70% by mass or lower, further preferably 65% by mass or lower, or may be 60% by mass or lower.

In other words, in the pyrolysis step, the amount of the pyrolysis oil based on the total amount of the first gas fraction, the pyrolysis oil and the residue fraction may be, for example, 40 to 80% by mass, 40 to 75% by mass, 40 to 70% by mass, 40 to 65% by mass, 40 to 60% by mass, 45 to 80% by mass, 45 to 75% by mass, 45 to 70% by mass, 45 to 65% by mass, 45 to 60% by mass, 48 to 80% by mass, 48 to 75% by mass, 48 to 70% by mass, 48 to 65% by mass, 48 to 60% by mass, 50 to 80% by mass, 50 to 75% by mass, 50 to 70% by mass, 50 to 65% by mass, 50 to 60% by mass, 51 to 80% by mass, 51 to 75% by mass, 51 to 70% by mass, 51 to 65% by mass, 51 to 60% by mass, 52 to 80% by mass, 52 to 75% by mass, 52 to 70% by mass, 52 to 65% by mass or 52 to 60% by mass.

Conventionally, methods for treating waste materials have been mainly studied so as to carry out pyrolysis in conditions so that residue fractions are less produced and gas fractions are more produced from the viewpoint that large amounts of such waste materials are to be treated as much as possible (for example, Patent Literature 1). On the contrary, the production method of the present embodiment, in which pyrolysis is performed intentionally in conditions so that the amount of the pyrolysis oil is in the above range, thus allows for a more enhancement in yield of the chemical product obtained through the low-temperature hydrogenation step, the hydrogenolysis step and the steam cracking step, allows a powdery carbide to be more easily obtained from the residue fraction, and allows a heavy distillate fraction obtained in the steam cracking step to be more suitable as a raw material for carbide production.

In the pyrolysis step, the amount of the first gas fraction based on the total amount of the first gas fraction, the pyrolysis oil and the residue fraction is, for example, 25% by mass or lower. In the pyrolysis step, the amount of the first gas fraction based on the total amount of the first gas fraction, the pyrolysis oil and the residue fraction is preferably 20% by mass or lower, more preferably 15% by mass or lower, or may be 13% by mass or lower or 10% by mass or lower, from the viewpoint of an enhancement in yield of the chemical product obtained through the low-temperature hydrogenation step, the hydrogenolysis step and the steam cracking step. Pyrolysis conditions so that the amount of the first gas fraction is 25% by mass or lower can suppress a reduction in yield of the pyrolysis oil due to excess progression of pyrolysis of the crushed product. In other words, the above pyrolysis conditions can inhibit the pyrolysis oil generated through pyrolysis of the crushed product from being further pyrolyzed and formed into a gas fraction and can more enhance the yield of the pyrolysis oil which can be formed into a chemical product through the low-temperature hydrogenation step, the hydrogenolysis step and the steam cracking step, thereby resulting in a more enhancement in yield of the chemical product.

The amount of the first gas fraction based on the total amount of the first gas fraction, the pyrolysis oil and the residue fraction may be, for example, 0.1% by mass or higher, or may be 0.5% by mass or higher, 0.7% by mass or higher, 1% by mass or higher, 1.3% by mass or higher or 1.5% by mass or higher. In a case where a chlorine fraction is contained in the crushed product, one portion of the chlorine fraction in the crushed product is gasified as a chlorine gas or the like through pyrolysis. In other words, one portion of the chlorine fraction contained in the crushed product is removed as one portion of the first gas fraction. Accordingly, a case where a predetermined amount of the first gas fraction is generated in the pyrolysis step can allow for decrease of the chlorine fraction contained in the pyrolysis oil as compared with a case where the first gas fraction is not generated in the pyrolysis step. Therefore, pyrolysis conditions allowing for generation of a predetermined amount of the first gas fraction are set to more enhance the purity of the chemical product obtained through the low-temperature hydrogenation step for pyrolysis oil, the hydrogenolysis step for low-temperature hydrogenated oil, and the steam cracking step for steam cracking raw oil. In a case where a catalyst is used in the hydrogenolysis step, poisoning to the catalyst due to the chlorine fraction can be suppressed and degradation of the catalyst can be suppressed. While the chlorine fraction is exemplified in the above, the same also applies to a case where the crushed product contains a nitrogen fraction, a sulfur fraction, a halogen element fraction other than the chlorine fraction, and/or the like

In other words, the amount of the first gas fraction based on the total amount of the first gas fraction, the pyrolysis oil and the residue fraction may be, for example, 0.1 to 25% by mass, 0.1 to 20% by mass, 0.1 to 15% by mass, 0.1 to 13% by mass, 0.1 to 10% by mass, 0.5 to 25% by mass, 0.5 to 20% by mass, 0.5 to 15% by mass, 0.5 to 13% by mass, 0.5 to 10% by mass, 0.7 to 25% by mass, 0.7 to 20% by mass, 0.7 to 15% by mass, 0.7 to 13% by mass, 0.7 to 10% by mass, 1 to 25% by mass, 1 to 20% by mass, 1 to 15% by mass, 1 to 13% by mass, 1 to 10% by mass, 1.3 to 25% by mass, 1.3 to 20% by mass, 1.3 to 15% by mass, 1.3 to 13% by mass, 1.3 to 10% by mass, 1.5 to 25% by mass, 1.5 to 20% by mass, 1.5 to 15% by mass, 1.5 to 13% by mass or 1.5 to 10% by mass.

In the pyrolysis step, the amount of the residue fraction based on the total amount of the first gas fraction, the pyrolysis oil and the residue fraction may be, for example, 10% by mass or higher, and is preferably 15% by mass or higher, more preferably 20% by mass or higher from the viewpoint of an enhancement in yield of the chemical product obtained through the low-temperature hydrogenation step, the hydrogenolysis step and the steam cracking step, and from the viewpoint of an enhancement in yield of a carbide recovered as a residue fraction. Pyrolysis conditions so that the amount of the residue fraction is 10% by mass or higher can suppress a reduction in yield of the pyrolysis oil due to excess progression of pyrolysis of the crushed product. In other words, the above pyrolysis conditions can inhibit the pyrolysis oil generated through pyrolysis of the crushed product from being further pyrolyzed and formed into a gas fraction and can more enhance the yield of the pyrolysis oil which can be formed into a chemical product through the low-temperature hydrogenation step, the hydrogenolysis step and the steam cracking step, thereby resulting in a more enhancement in yield of the chemical product. The above range is preferred also from the viewpoint of more carbide recovery.

The amount of the residue fraction based on the total amount of the first gas fraction, the pyrolysis oil and the residue fraction may be, for example, 60% by mass or lower, and is preferably 55% by mass or lower, more preferably 50% by mass or lower, further preferably 45% by mass or lower, or may be 40% by mass or lower from the viewpoint of an enhancement in yield of the chemical product obtained through the low-temperature hydrogenation step, the hydrogenolysis step and the steam cracking step, and from the viewpoint of allowing a powdery carbide to be more easily obtained from the residue fraction. As the amount of the residue fraction based on the total amount of the first gas fraction, the pyrolysis oil and the residue fraction is larger, the amounts of the first gas fraction and the pyrolysis oil based on the total amount of the first gas fraction, the pyrolysis oil and the residue fraction are smaller. Accordingly, pyrolysis conditions so that the amount of the residue fraction is 60% by mass or lower can inhibit a crushed product to be formed into pyrolysis oil from remaining as the residue fraction and can more enhance the yield of the pyrolysis oil which can be formed into a chemical product through the low-temperature hydrogenation step, the hydrogenolysis step and the steam cracking step, thereby resulting in a more enhancement in yield of the chemical product.

In other words, the amount of the residue fraction based on the total amount of the first gas fraction, the pyrolysis oil and the residue fraction may be, for example, 10 to 60% by mass, 10 to 55% by mass, 10 to 50% by mass, 10 to 45% by mass, 10 to 40% by mass, 15 to 60% by mass, 15 to 55% by mass, 15 to 50% by mass, 15 to 45% by mass, 15 to 40% by mass, 20 to 60% by mass, 20 to 55% by mass, 20 to 50% by mass, 20 to 45% by mass or 20 to 40% by mass.

The first gas fraction may be, for example, a component which is gaseous at normal pressure and 20°C in a product generated through pyrolysis. The first gas fraction may contain, for example, hydrogen, a hydrocarbon having 1 to 4 carbon atoms, or the like.

The method for recovering the first gas fraction is not particularly limited. The first gas fraction can be recovered as, for example, a residue gas after a pyrolysis gas produced through pyrolysis is cooled and an oil fraction (pyrolysis oil) is recovered.

The first gas fraction can be, for example, reused as a high-temperature gas (oxygen-free gas) in pyrolysis. In other words, the first gas fraction may be heated and fed as one portion (or all) of the high-temperature gas (oxygen-free gas) to the pyrolysis furnace. The first gas fraction can be, for example, utilized as a combustion gas for heating a pyrolysis section in the pyrolysis step or a combustion gas of a heating furnace in any other step.

The pyrolysis oil may be, for example, a component which is liquid at normal pressure and 20°C in a product generated through pyrolysis. The method for recovering the pyrolysis oil is not particularly limited. The pyrolysis oil can be recovered as, for example, an oil fraction distilled out from the pyrolysis furnace. In other words, the pyrolysis oil can be recovered as, for example, an oil fraction condensed by cooling of a pyrolysis gas produced through pyrolysis.

Distillation characteristics of the pyrolysis oil are not particularly limited, and may be, for example, any characteristics as long as the pyrolysis oil can be used as raw oil in the low-temperature hydrogenation step and the hydrogenolysis step.

The 10% distillation temperature (T10) of the pyrolysis oil may be, for example, 90°C or higher, and is preferably 140°C or higher, more preferably 150°C or higher, further preferably 155°C or higher. The 10% distillation temperature of the pyrolysis oil may be, for example, 200°C or lower, or may be 190°C or lower or 180°C or lower.

In other words, the 10% distillation temperature (T10) of the pyrolysis oil may be, for example, 90 to 200°C, 90 to 190°C, 90 to 180°C, 140 to 200°C, 140 to 190°C, 140 to 180°C, 150 to 200°C, 150 to 190°C, 150 to 180°C, 155 to 200°C, 155 to 190°C or 155 to 180°C.

The 90% distillation temperature (T90) of the pyrolysis oil may be, for example, 350°C or higher, and is preferably 370°C or higher, more preferably 390°C or higher, further preferably 400°C or higher, or may be 410°C or higher, 420°C or higher, 430°C or higher, 440°C or higher or 450°C or higher. The 90% distillation temperature (T90) of the pyrolysis oil may be, for example, 650°C or lower, or may be preferably 600°C or lower, more preferably 550°C or lower.

In other words, the 90% distillation temperature (T90) of the pyrolysis oil may be, for example, 350 to 650°C, 350 to 600°C, 350 to 550°C, 370 to 650°C, 370 to 600°C, 370 to 550°C, 390 to 650°C, 390 to 600°C, 390 to 550°C, 400 to 650°C, 400 to 600°C, 400 to 550°C, 410 to 650°C, 410 to 600°C, 410 to 550°C, 420 to 650°C, 420 to 600°C, 420 to 550°C, 430 to 650°C, 430 to 600°C, 430 to 550°C, 440 to 650°C, 440 to 600°C, 440 to 550°C, 450 to 650°C, 450 to 600°C or 450 to 550°C.

The pyrolysis oil contains a low-boiling point oil having a boiling point of 350°C or lower and may further contain a high-boiling point oil having a boiling point of higher than 350°C.

The content of the high-boiling point oil in the pyrolysis oil is not particularly limited, and is preferably 50% by mass or lower, more preferably 45% by mass or lower, further preferably 40% by mass or lower, still more preferably 35% by mass or lower based on the total amount of the pyrolysis oil. The content of the high-boiling point oil in the pyrolysis oil can be modulated to 50% by mass or lower to reduce the diene value in the raw oil and thus reduce contaminating and clogging of a pipe and a heat exchanger in a set of processes.

The content of the high-boiling point oil in the pyrolysis oil may be, for example, 5% by mass or higher, may be 8% by mass or higher, or may be 10% by mass or higher based on the total amount of the pyrolysis oil.

In other words, the content of the high-boiling point oil in the pyrolysis oil may be, for example, 5 to 50% by mass, 5 to 45% by mass, 5 to 40% by mass, 5 to 35% by mass, 8 to 50% by mass, 8 to 45% by mass, 8 to 40% by mass, 8 to 35% by mass, 10 to 50% by mass, 10 to 45% by mass, 10 to 40% by mass, 10 to 35% by mass based on the total amount of the pyrolysis oil.

The pyrolysis oil may contain a nitrogen fraction, a sulfur fraction, a chlorine fraction, a halogen element, and/or the like.

The nitrogen fraction in the pyrolysis oil may be, for example, 100 ppm by mass or higher, or may be 2000 ppm by mass or higher, 2500 ppm by mass or higher or 3000 ppm by mass or higher. In the present embodiment, even when a large amount of the nitrogen fraction is present in the pyrolysis oil, the nitrogen fraction can be converted into a gas component such as ammonia by hydrogenation and easily separated from a liquid product in the hydrogenolysis step. The liquid product in which the nitrogen fraction is significantly reduced can be then fed to the steam cracking step to easily obtain a high-purity chemical product (a chemical product in which the nitrogen fraction is less incorporated). The nitrogen fraction in the pyrolysis oil may be, for example, 20000 ppm by mass or lower, or may be 15000 ppm by mass or lower or 10000 ppm by mass or lower. If the nitrogen fraction is 20000 ppm by mass or lower, the nitrogen fraction in the liquid product after the hydrogenolysis step can be more remarkably reduced.

In other words, the nitrogen fraction in the pyrolysis oil may be, for example, 100 to 20000 ppm by mass, 100 to 15000 ppm by mass, 100 to 10000 ppm by mass, 2000 to 20000 ppm by mass, 2000 to 15000 ppm by mass, 2000 to 10000 ppm by mass, 2500 to 20000 ppm by mass, 2500 to 15000 ppm by mass, 2500 to 10000 ppm by mass, 3000 to 20000 ppm by mass, 3000 to 15000 ppm by mass or 3000 to 10000 ppm by mass.

The sulfur fraction in the pyrolysis oil may be, for example, 10 ppm by mass or higher, or may be 100 ppm by mass or higher, 500 ppm by mass or higher or 1000 ppm by mass or higher. In the present embodiment, even when a large amount of the sulfur fraction is present in the pyrolysis oil, the sulfur fraction can be converted to a gas component such as hydrogen sulfide by hydrogenation and easily separated from a liquid product in the hydrogenolysis step. The liquid product in which the sulfur fraction is significantly reduced can be then fed to the steam cracking step to easily obtain a high-purity chemical product (a chemical product in which the sulfur fraction is less incorporated). The sulfur fraction in the pyrolysis oil may be, for example, 30000 ppm by mass or lower, or may be 20000 ppm by mass or lower or 10000 ppm by mass or lower. Thus, the sulfur fraction in the liquid product after the hydrogenolysis step can be more remarkably reduced.

In other words, the sulfur fraction in the pyrolysis oil may be, for example, 10 to 30000 ppm by mass, 10 to 20000 ppm by mass, 10 to 10000 ppm by mass, 100 to 30000 ppm by mass, 100 to 20000 ppm by mass, 100 to 10000 ppm by mass, 500 to 30000 ppm by mass, 500 to 20000 ppm by mass, 500 to 10000 ppm by mass, 1000 to 30000 ppm by mass, 1000 to 20000 ppm by mass or 1000 to 10000 ppm by mass.

The chlorine fraction in the pyrolysis oil may be, for example, 10 ppm by mass or higher, or may be 30 ppm by mass or higher, 50 ppm by mass or higher or 100 ppm by mass or higher. In the present embodiment, even when a large amount of the chlorine fraction is present in the pyrolysis oil, the chlorine fraction can be converted to a gas component such as hydrogen chloride by hydrogenation and easily separated from a liquid product in the hydrogenolysis step. The liquid product in which the chlorine fraction is significantly reduced can be then fed to the steam cracking step to easily obtain a high-purity chemical product (a chemical product in which the chlorine fraction is less incorporated). The chlorine fraction in the pyrolysis oil may be, for example, 2000 ppm by mass or lower, or may be 1500 ppm by mass or lower or 1000 ppm by mass or lower. If the chlorine fraction is 1000 ppm by mass or lower, the chlorine fraction in the liquid product after the hydrogenolysis step can be more remarkably reduced. Not only the chlorine fraction, but also any other halogen element fraction is desirably in the same range.

In other words, the chlorine fraction in the pyrolysis oil may be, for example, 10 to 2000 ppm by mass, 10 to 1500 ppm by mass, 10 to 1000 ppm by mass, 30 to 2000 ppm by mass, 30 to 1500 ppm by mass, 30 to 1000 ppm by mass, 50 to 2000 ppm by mass, 50 to 1500 ppm by mass, 50 to 1000 ppm by mass, 100 to 2000 ppm by mass, 100 to 1500 ppm by mass or 100 to 1000 ppm by mass.

The residue fraction may be, for example, a solid fraction which is not recovered as a pyrolysis gas in a product generated through pyrolysis. The method for recovering the residue fraction is not particularly limited. The residue fraction can be recovered as, for example, a solid fraction remaining in the pyrolysis furnace (a solid fraction which is not discharged as a pyrolysis gas outside the reaction system).

The residue fraction can be a carbide formed through pyrolysis of the crushed product of used tires. In embodiments, the residue fraction can be recovered as such a carbide (carbide recovery step).

The carbide is a component whose large portion is occupied by carbon. The carbide may be, for example, a carbon concentrate containing carbon black as a component. The carbide may have a block-like portion aggregated in the course of pyrolysis. In this case, a crusher or the like can be used to pulverize the carbide aggregated, thereby providing a powdery carbide.

In other words, the carbide recovery step in the production method of the present embodiment may be a step of pulverizing the residue fraction to obtain a powdery carbide.

The powdery carbide can be suitably used in an application, for example, an additive for rubber, an additive for resins, or a colorant.

The residue fraction may contain, for example, a rubber component of a waste material not completely pyrolyzed, depending on pyrolysis conditions. In this case, the rubber component has adhesiveness and therefore a carbide as a block-like body in which carbon black and the rubber component are blended is recovered. Powderization of such a carbide with a pulverizer or the like is difficult because adhesiveness of the rubber component inhibits powderization of such a carbide. Such a block-like carbide then leads to poor dispersing in a matrix and thus is difficult to use in an application such as an additive for rubber, an additive for resins, or colorant. On the contrary, the above-mentioned pyrolysis conditions can be adopted in the pyrolysis step in the present embodiment to decrease the remaining of the rubber component in the carbide recovered and thus allow a powdery carbide suitable in an application such as an additive for rubber, an additive for resins, or a colorant to be efficiently obtained.

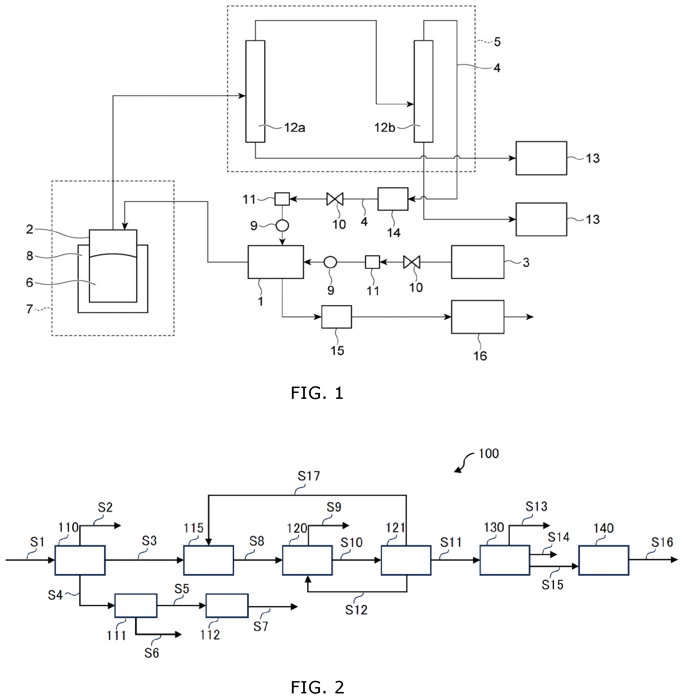

The pyrolysis step may be carried out with, for example, a pyrolysis apparatus including a pyrolysis furnace. Fig. 1 is an outline drawing illustrating one example of the pyrolysis apparatus.

The pyrolysis apparatus of Fig. 1 includes a heat exchanger 1 for heating an oxygen-free gas, a decomposition apparatus 7 which has a pyrolysis furnace 2 receiving a waste material 6 therein and an external heating tool 8 externally heating the pyrolysis furnace 2, an oil fraction recovery apparatus 5 for recovering an oil fraction (pyrolysis oil) obtained by cooling and condensing a pyrolysis gas generated in the decomposition apparatus 7, a circulation path 4 for feeding a residue gas after recovery of the oil fraction in the oil fraction recovery apparatus 5, as an oxygen-free gas, to the heat exchanger 1, and an oxygen-free gas-feeding source 3 for feeding the oxygen-free gas to the heat exchanger 1.

The pyrolysis apparatus of Fig. 1 also includes a flow meter 9, a damper 10 and an air blower 11 in a pipe which connects the oxygen-free gas-feeding source 3 and the heat exchanger 1 in order to feed the oxygen-free gas from the oxygen-free gas-feeding source 3, and includes a flow meter 9, a damper 10, an air blower 11 and a hot-air furnace 14 in a circulation path 4 for circulating the residue gas after recovery in the oil fraction recovery apparatus 5, as an oxygen-free gas, in the heat exchanger 1.

The oil fraction recovery apparatus 5 may include a plurality of dry distillation towers 12a and 12b in order to divide the recovered oil fraction depending on its boiling point. Each of the dry distillation towers 12 may be connected via the pipe to a recovery tank 13 at a lower portion of such each tower, and can preserve the recovered oil fraction. Here, the pyrolysis apparatus of Fig. 1 includes the plurality of dry distillation towers 12a and 12b, but, in the present embodiment, the pyrolysis oil can be directly used for raw oil in the hydrogenolysis step and therefore the number of such dry distillation towers may be one. In the pyrolysis apparatus of Fig. 1, each of the dry distillation towers 12 is connected to a separate recovery tank 13, but each of the dry distillation tower 12 may be connected to the same recovery tank 13.

It is preferable to remove at least one portion of the high-boiling point oil having a boiling point of higher than 350°C from the pyrolysis oil in the present invention by distillation or the like before the next low-temperature hydrogenation step. At least one portion of the high-boiling point oil can be removed from the pyrolysis oil to allow for suppression of generation of contamination in the heat exchanger and the heating furnace in the low-temperature hydrogenation step and the hydrogenolysis step and to allow a long-term process operation to be realized. Without any limitation, it is more preferable to remove, for example, at least one portion of high-boiling point oil having a boiling point of higher than 450°C.

The method for removing the high-boiling point oil can include cooling the pyrolysis gas immediately after production in the pyrolysis step to separate pyrolysis oil more containing the high-boiling point oil and a gas fraction more containing low-boiling point oil, and thereafter further cooling the gas fraction more containing low-boiling point oil to separate a first gas fraction and pyrolysis oil more containing the low-boiling point oil. Any other method can include heating the pyrolysis oil to separate the low-boiling point oil and the high-boiling point oil in a distillation tower or the like, but the removal method is not limited to any method described.

The content of the high-boiling point oil in the pyrolysis oil from which one portion of the high-boiling point oil is removed before the low-temperature hydrogenation step (hereinafter, also referred to as "fractionally distilled pyrolysis oil") is not particularly limited, and is 40% by mass or lower, more preferably 35% by mass or lower, further preferably 30% by mass or lower, still more preferably 25% by mass or lower based on the total amount of the fractionally distilled pyrolysis oil before the low-temperature hydrogenation step. If the content of the high-boiling point oil in the fractionally distilled pyrolysis oil before the low-temperature hydrogenation step is 40% by mass or lower, the influence of a component to be easily made heavy, such as olefin or diene, can be suppressed.

The content of the high-boiling point oil in the fractionally distilled pyrolysis oil before the low-temperature hydrogenation step may be, for example, 1% by mass or higher, may be 3% by mass or higher, or may be 5% by mass or higher based on the total amount of the fractionally distilled pyrolysis oil before the low-temperature hydrogenation step.

The high-boiling point oil removed may be recycled as a raw material in the pyrolysis step, may be used as a raw material for carbon black production, or may be used as fuel.

### (Low-temperature hydrogenation step)

The low-temperature hydrogenation step is a step of subjecting raw oil containing at least one portion of the pyrolysis oil to low-temperature hydrotreatment at 180°C or higher and 350°C or lower, to obtain low-temperature hydrogenated oil.

The raw oil in the low-temperature hydrogenation step may contain the pyrolysis oil, or may contain one portion of a distillate fraction obtained by fractionally distilling the pyrolysis oil. The raw oil in the low-temperature hydrogenation step may further contain any other component than the pyrolysis oil, or the pyrolysis oil may be directly used as the raw oil.

One portion of the raw oil used in the low-temperature hydrogenation step may be recycled oil containing at least one portion of a light fraction and a heavy fraction obtained in a hydrogenolysis step described later, or any hydrocarbon oil for dilution. Such recycled oil or any hydrocarbon oil for dilution can be used to dilute dienes and olefins easily generating contamination by polymerization, and therefore the effect of preventing contamination from being generated is obtained. The influence by generation of heat in a reactor in the low-temperature hydrogenation step or the hydrogenolysis step can be reduced, and stability of process running can be enhanced. Examples of the hydrocarbon for dilution include a kerosene oil distillate fraction, a diesel oil distillate fraction, and a depressurized diesel oil distillate fraction each derived from crude oil and obtained from an atmospheric distillation apparatus, LCO obtained from an FCC apparatus, and furthermore product kerosene oil and product diesel oil.

The amount of the recycled oil based on the total amount of the recycled oil and the pyrolysis oil in the raw oil in the low-temperature hydrogenation step is preferably 10% by mass or higher and 99% by mass or lower, more preferably 20% by mass or higher and 97% by mass or lower, further preferably 30% by mass or higher and 95% by mass or lower, particularly preferably 40% by mass or higher and 93% by mass or lower, most preferably 50% by mass or higher and 90% by mass or lower.

The low-temperature hydrogenation step may be a step of hydrogenating the raw oil in the presence of a hydrogenation catalyst. Such hydrogenation can be carried out by, for example, feeding the raw oil to a reactor in which the hydrogenation catalyst is placed, and contacting the raw oil with the hydrogenation catalyst in the reactor.

The hydrogenation catalyst used here can be, for example, a known hydrogenation catalyst used for hydrogenation of hydrocarbon oil. The hydrogenation catalyst preferably includes, for example, a Ni-based or Co-based catalyst from the viewpoint of hydrogenation performance. The Ni-based catalyst is a catalyst having Ni as an active metal. The Co-based catalyst is a catalyst having Co as an active metal. Such hydrogenation may be carried out with, as the hydrogenation catalyst, one of the hydrogenation catalyst or a plurality of such hydrogenation catalysts.

The reaction temperature in the low-temperature hydrogenation step is 180°C or higher and 350°C or lower, preferably 190°C or higher and 340°C or lower, more preferably 200°C or higher and 330°C or lower, further preferably 2102°C or higher and 320°C or lower, particularly preferably 220°C or higher and 310°C or lower, most preferably 240°C or higher and 305°C or lower. The reaction temperature in the low-temperature hydrogenation step can be modulated in the above range, in particular, 200°C or higher, furthermore 240°C or higher, to provide low-temperature hydrogenated oil in which the diene value is reduced.

The reaction pressure in the low-temperature hydrogenation step is not particularly limited, may be, for example, 1 MPaG or higher, and is preferably 3 MPaG or higher, more preferably 5 MPaG or higher. The reaction pressure in the low-temperature hydrogenation step is not particularly limited, may be, for example, 20 MPaG or lower, and is preferably 19 MPaG or lower, more preferably 18 MPaG or lower.

In other words, the reaction pressure in the low-temperature hydrogenation step may be, for example, 1 to 20 MPaG, 1 to 19 MPaG, 1 to 18 MPaG, 3 to 20 MPaG, 3 to 19 MPaG, 3 to 18 MPaG, 5 to 20 MPaG, 5 to 19 MPaG or 5 to 18 MPaG.

When the low-temperature hydrogenation step is carried out with a flow-type reactor, the weight hourly space velocity (WHSV) of the raw oil may be, for example, 0.1 h⁻¹ or higher, and is preferably 0.15 h⁻¹ or higher, more preferably 0.2 h⁻¹ or higher. The weight hourly space velocity (WHSV) of the raw oil may be, for example, 5 h⁻¹ or lower, and is preferably 4 h⁻¹ or lower, more preferably 3 h⁻¹ or lower.

In other words, the weight hourly space velocity (WHSV) of the raw oil may be, 0.1 to 5 h⁻¹, 0.1 to 4 h⁻¹, 0.1 to 3 h⁻¹, 0.15 to 5 h⁻¹, 0.15 to 4 h-¹, 0.15 to 3 h⁻¹, 0.2 to 5 h⁻¹, 0.2 to 4 h⁻¹ or 0.2 to 3 h⁻¹.

The low-temperature hydrogenation step is carried out in the presence of hydrogen. When the low-temperature hydrogenation step is carried out with a flow-type reactor, the hydrogen/oil ratio may be, for example, 100 NL/L or higher, and is preferably 150 NL/L or higher, more preferably 200 NL/L or higher. The hydrogen/oil ratio may be, for example, 1500 NL/L or lower, and is preferably 1400 NL/L or lower, more preferably 1300 NL/L or lower.

In other words, the hydrogen/oil ratio may be, for example, 100 to 1500 NL/L, 100 to 1400 NL/L, 100 to 1300 NL/L, 150 to 1500 NL/L, 150 to 1400 NL/L, 150 to 1300 NL/L, 200 to 1500 NL/L, 200 to 1400 NL/L or 200 to 1300 NL/L.

The low-temperature hydrogenated oil obtained in the low-temperature hydrogenation step preferably has the following characteristics.

The diene value of the low-temperature hydrogenated oil is preferably lower than 14.0 gI₂/100 g, more preferably 13.0 gI₂/100 g or lower, further preferably 12.0 gI₂/100 g or lower, particularly preferably 11.0 gI₂/100 g or lower.

The iodine value of the low-temperature hydrogenated oil is preferably lower than 160 gI₂/100 g, more preferably 155 gI₂/100 g or lower, further preferably 150 gI₂/100 g or lower, particularly preferably 145 gI₂/100 g or lower.

The total acid value of the low-temperature hydrogenated oil is lower than 5.0 mgKOH/g, more preferably 4.8 mgKOH/g or lower, further preferably 4.7 mgKOH/g or lower, particularly preferably 4.5 mgKOH/g or lower.

In the present invention, olefins, dienes, higher fatty acid, and the like each serving as a fouling factor by polymerization in the pyrolysis oil processed in the low-temperature hydrogenation step can be decreased in advance, to inhibit fouling in a heat exchanger and a heating furnace from being generated even in heating to a high-temperature region necessary for the subsequent hydrogenolysis step, and allow a long-term process operation to be realized.

### (Hydrogenolysis step)

The hydrogenolysis step is a step of hydrogenolyzing raw oil containing at least one portion of the low-temperature hydrogenated oil, to obtain a second gas fraction, a light fraction having a boiling point of 350°C or lower, and a heavy fraction having a boiling point of higher than 350°C.

The raw oil in the hydrogenolysis step contains the low-temperature hydrogenated oil, and may contain one portion of the pyrolysis oil, may contain one portion of a distillate fraction obtained by fractionally distilling the pyrolysis oil, or may further contain any other component than these.

The raw oil in the hydrogenolysis step contains low-boiling point oil having a boiling point of 350°C or lower and high-boiling point oil having a boiling point of higher than 350°C, and the content of the high-boiling point oil is, for example, 50% by mass or lower based on the total amount of the raw oil. Decomposition conditions in the hydrogenolysis step can be adjusted to form the high-boiling point oil into a light fraction, and the light fraction is a substance to be fed as a raw material for producing a chemical product in a steam cracking step described later. Therefore, the high-boiling point oil, according to an increase in content thereof, tends to be more suitable as the raw oil to result in a more enhancement in chemical product yield. However, it is preferable for reduction of contaminating and clogging in a pipe and a heat exchanger in a set of processes to decrease the high-boiling point oil in advance.

The content of the high-boiling point oil in the raw oil in the hydrogenolysis step is preferably 50% by mass or lower, more preferably 40% by mass or lower, further preferably 30% by mass or lower, further preferably 20% by mass or lower, particularly preferably 10% by mass or lower, most preferably 5% by mass or lower based on the total amount of the raw oil.

The content of the high-boiling point oil in the raw oil in the hydrogenolysis step may be 1.0% by mass or higher, may be 2.0% by mass or higher, or may be 3.0% by mass or higher based on the total amount of the raw oil.

The 10% distillation temperature of the raw oil in the hydrogenolysis step may be, for example, 90°C or higher, and is preferably 140°C or higher, more preferably 150°C or higher, further preferably 155°C or higher. The 10% distillation temperature of the raw oil in the hydrogenolysis step may be, for example, 200°C or lower, or may be 190°C or lower or 180°C or lower.

In other words, the 10% distillation temperature of the raw oil in the hydrogenolysis step may be, for example, 90 to 200°C, 90 to 190°C, 90 to 180°C, 140 to 200°C, 140 to 190°C, 140 to 180°C, 150 to 200°C, 150 to 190°C, 150 to 180°C, 155 to 200°C, 155 to 190°C or 155 to 180°C.

The 90% distillation temperature of the raw oil in the hydrogenolysis step may be, for example, 350°C or higher, or is preferably 370°C or higher, more preferably 390°C or higher, further preferably 400°C or higher, or may be 410°C or higher, 420°C or higher, 430°C or higher, 440°C or higher or 450°C or higher. The 90% distillation temperature of the raw oil in the hydrogenolysis step may be, for example, 650°C or lower, or may be preferably 600°C or lower, more preferably 550°C or lower.

In other words, the 90% distillation temperature of the raw oil in the hydrogenolysis step may be, for example, 350 to 650°C, 350 to 600°C, 350 to 550°C, 370 to 650°C, 370 to 600°C, 370 to 550°C, 390 to 650°C, 390 to 600°C, 390 to 550°C, 400 to 650°C, 400 to 600°C, 400 to 550°C, 410 to 650°C, 410 to 600°C, 410 to 550°C, 420 to 650°C, 420 to 600°C, 420 to 550°C, 430 to 650°C, 430 to 600°C, 430 to 550°C, 440 to 650°C, 440 to 600°C, 440 to 550°C, 450 to 650°C, 450 to 600°C or 450 to 550°C.

The raw oil in the hydrogenolysis step may contain a nitrogen fraction, a sulfur fraction, a chlorine fraction, any other halogen element, and/or the like.

The nitrogen fraction in the raw oil in the hydrogenolysis step may be, for example, 100 ppm by mass or higher, or may be 2000 ppm by mass or higher, 2500 ppm by mass or higher or 3000 ppm by mass or higher. In the present embodiment, since a chemical product is produced through the hydrogenolysis step and the cracking step, a high-purity chemical product (a chemical product in which the nitrogen fraction is less incorporated) can be easily obtained even when a large amount of the nitrogen fraction is present in the raw oil. The nitrogen fraction in the raw oil may be, for example, 20000 ppm by mass or lower, or may be 15000 ppm by mass or lower or 10000 ppm by mass or lower.

In other words, the nitrogen fraction in the raw oil in the hydrogenolysis step may be, for example, 100 to 20000 ppm by mass, 100 to 15000 ppm by mass, 100 to 10000 ppm by mass, 2000 to 20000 ppm by mass, 2000 to 15000 ppm by mass, 2000 to 10000 ppm by mass, 2500 to 20000 ppm by mass, 2500 to 15000 ppm by mass, 2500 to 10000 ppm by mass, 3000 to 20000 ppm by mass, 3000 to 15000 ppm by mass or 3000 to 10000 ppm by mass.

The sulfur fraction in the raw oil in the hydrogenolysis step may be, for example, 10 ppm by mass or higher, or may be 100 ppm by mass or higher, 500 ppm by mass or higher or 1000 ppm by mass or higher. In the present embodiment, since a chemical product is produced through the hydrogenolysis step and the cracking step, a high-purity chemical product (a chemical product in which the sulfur fraction is less incorporated) can be easily obtained even when a large amount of the sulfur fraction is present in the raw oil. The sulfur fraction in the raw oil may be, for example, 30000 ppm by mass or lower, or may be 20000 ppm by mass or lower or 10000 ppm by mass or lower.

In other words, the sulfur fraction in the raw oil in the hydrogenolysis step may be, for example, 10 to 30000 ppm by mass, 10 to 20000 ppm by mass, 10 to 10000 ppm by mass, 100 to 30000 ppm by mass, 100 to 20000 ppm by mass, 100 to 10000 ppm by mass, 500 to 30000 ppm by mass, 500 to 20000 ppm by mass, 500 to 10000 ppm by mass, 1000 to 30000 ppm by mass, 1000 to 20000 ppm by mass or 1000 to 10000 ppm by mass.

The chlorine fraction in the raw oil in the hydrogenolysis step may be, for example, 10 ppm by mass or higher, or may be 30 ppm by mass or higher, 50 ppm by mass or higher or 100 ppm by mass or higher. In the present embodiment, since a chemical product is produced through the hydrogenolysis step and the cracking step, a high-purity chemical product (a chemical product in which the chlorine fraction is less incorporated) can be easily obtained even when a large amount of the chlorine fraction is present in the raw oil. The chlorine fraction in the raw oil may be, for example, 2000 ppm by mass or lower, or may be 1500 ppm by mass or lower or 1000 ppm by mass or lower. Not only the chlorine fraction, but also any other halogen element fraction may be in the same range.

In other words, the chlorine fraction in the raw oil in the hydrogenolysis step may be, for example, 10 to 2000 ppm by mass, 10 to 1500 ppm by mass, 10 to 1000 ppm by mass, 30 to 2000 ppm by mass, 30 to 1500 ppm by mass, 30 to 1000 ppm by mass, 50 to 2000 ppm by mass, 50 to 1500 ppm by mass, 50 to 1000 ppm by mass, 100 to 2000 ppm by mass, 100 to 1500 ppm by mass or 100 to 1000 ppm by mass.

The hydrogenolysis step may be a step of hydrogenolyzing the raw oil in the presence of a hydrogenolysis catalyst. Such hydrogenolysis can be carried out by, for example, feeding the raw oil to a reactor in which the hydrogenolysis catalyst is placed, and contacting the raw oil with the hydrogenolysis catalyst in the reactor.

The hydrogenolysis catalyst used here can be, for example, a known hydrogenolysis catalyst used for hydrogenolysis of hydrocarbon oil.

In the present embodiment, in a case where the high-boiling point oil is contained in the raw oil in the hydrogenolysis step, the hydrogenolysis catalyst is preferably a catalyst having excellent hydrogenation performance and being capable of efficiently hydrogenolyzing the high-boiling point oil. The hydrogenolysis catalyst preferably includes, for example, a Ni-based catalyst from the viewpoint of hydrogenation performance. The Ni-based catalyst is a catalyst having Ni as an active metal.

The hydrogenolysis step may be carried out with one of the hydrogenolysis catalyst or a plurality of such hydrogenolysis catalysts. For example, a catalyst for desulfurization-denitrogenation, a catalyst with high decomposition ability, a catalyst with low decomposition ability, and the like described later may be appropriately combined and used as the hydrogenolysis catalyst in the hydrogenolysis step.

The catalyst for desulfurization-denitrogenation is not limited as long as it is a hydrogenolysis catalyst excellent in desulfurization performance and denitrogenation performance. Examples of the catalyst for desulfurization-denitrogenation include a hydrogenolysis catalyst formed by supporting an active metal on a support containing alumina. Such a hydrogenolysis catalyst tends to be excellent in desulfurization performance and denitrogenation performance.

A support of the catalyst for desulfurization-denitrogenation may be a support containing alumina, and the content of the alumina is preferably 50% by mass or higher. The content of the alumina in the support of the catalyst for desulfurization-denitrogenation may be, for example, 50% by mass or higher, and is preferably 55% by mass or higher, more preferably 60% by mass or higher based on the total amount of the support.

The support of the catalyst for desulfurization-denitrogenation may be one containing a component other than alumina. The support of the catalyst for desulfurization-denitrogenation may contain, for example, any oxide of elements in Group 2, Group 3, Group 4, Group 13, Group 14, or Group 15 of the periodic table. More specifically, the support of the catalyst for desulfurization-denitrogenation may be one containing at least one of oxides, for example, silica, phosphorus, magnesia, zirconia, boria, titania, calcia, and zinc. The support of the catalyst for desulfurization-denitrogenation preferably contains silica, silica-alumina, silica-alumina-phosphorus, silica-magnesia, alumina-silica-magnesia, alumina-silica-zirconia, or the like from the viewpoint of desulfurization-denitrogenation performance, industrial production and catalyst strength. The support of the catalyst for desulfurization-denitrogenation may have crystallinity or may be in an amorphous state. The shape of the support of the catalyst for desulfurization-denitrogenation is not particularly limited, and may be, for example, a spherical shape, a columnar shape, a trefoil shape, or a quatrefoil shape.

Examples of the active metal in the catalyst for desulfurization-denitrogenation include Ni, Mo, Co, W, and P. The catalyst for desulfurization-denitrogenation may have one of the active metal or two or higher of such active metals. The catalyst for desulfurization-denitrogenation preferably contains at least Ni, more preferably contains Ni and Mo or W from the viewpoint of allowing excellent hydrogenation performance to be easily realized and more efficiently making desulfurization-denitrogenation possible. The active metal may be activated by sulfurization treatment. A sulfide of, in particular, Ni among the above metals is contained to allow such a desulfurization-denitrogenation catalyst to more easily realize excellent hydrogenation performance.

Examples of the catalyst with high decomposition ability include a hydrogenolysis catalyst formed by supporting the active metal on a support containing zeolite. Such a hydrogenolysis catalyst tends to have a small pore and be excellent in hydrogenolysis ability.

The support of the catalyst with high decomposition ability may be a support containing zeolite, and the content of the zeolite is preferably 1% by mass or higher. The content of the zeolite in the support of the catalyst with high decomposition ability may be, for example, 2% by mass or higher, and is preferably 3% by mass or higher, more preferably 5% by mass or higher based on the total amount of the support.

The support of the catalyst with high decomposition ability may be one containing a component other than zeolite. The support of the catalyst with high decomposition ability may contain, for example, any oxide of elements in Group 2, Group 3, Group 4, Group 13, Group 14, or Group 15 of the periodic table. More specifically, the support of the catalyst with high decomposition ability may be one containing at least one of oxides, for example, silica, alumina, phosphorus, magnesia, zirconia, boria, titania, calcia, and zinc. The support of the catalyst with high decomposition ability preferably contains alumina, silica, silica-alumina, silica-alumina-phosphorus, silica-magnesia, alumina-silica-magnesia, alumina-silica-zirconia, or the like from the viewpoint of decomposition performance, desulfurization-denitrogenation performance, industrial production and catalyst strength. The support of the catalyst with high decomposition ability may have crystallinity or may be in an amorphous state. The shape of the support of the catalyst with high decomposition ability is not particularly limited, and may be, for example, a spherical shape, a columnar shape, a trefoil shape, or a quatrefoil shape.

Examples of the active metal in the catalyst with high decomposition ability include Ni, Mo, Co, W, and P. The catalyst with high decomposition ability may have one of the active metal or two or higher of such active metals. The catalyst with high decomposition ability preferably contains at least Ni, more preferably contains Ni and Mo or W from the viewpoint of allowing excellent hydrogenation performance to be easily realized and allowing the high-boiling point oil to be more efficiently hydrogenolyzed. The active metal may be activated by sulfurization treatment. A sulfide of, in particular, Ni among the above metals is contained to allow such a desulfurization-denitrogenation catalyst to more easily realize excellent hydrogenation performance.

Examples of the catalyst with low decomposition ability include a hydrogenolysis catalyst formed by supporting the active metal on a support containing alumina. Such a hydrogenolysis catalyst tends to have a large pore as compared with the catalyst with high decomposition ability and to have moderate hydrogenolysis ability as compared with the catalyst with high decomposition ability.

The support of the catalyst with low decomposition ability may be a support containing alumina. The content of the alumina in the support of the catalyst with low decomposition ability may be, for example, 20% by mass or higher, and is preferably 25% by mass or higher, more preferably 30% by mass or higher based on the total amount of the support.

The support of the catalyst with low decomposition ability may be one containing a component other than alumina. The support of the catalyst with low decomposition ability may contain, for example, any oxide of elements in Group 2, Group 3, Group 4, Group 13, Group 14, or Group 15 of the periodic table. More specifically, the support of the catalyst with low decomposition ability may be one containing at least one of oxides, for example, silica, phosphorus, magnesia, zirconia, boria, titania, calcia, and zinc. The support of the catalyst with low decomposition ability preferably contains silica, silica-alumina, silica-alumina-phosphorus, silica-magnesia, alumina-silica-magnesia, alumina-silica-zirconia, or the like from the viewpoint of decomposition performance, desulfurization-denitrogenation performance, industrial production and catalyst strength. The support of the catalyst with low decomposition ability may have crystallinity or may be in an amorphous state. The shape of the support of the catalyst with low decomposition ability is not particularly limited, and may be, for example, a spherical shape, a columnar shape, a trefoil shape, or a quatrefoil shape.

Examples of the active metal in the catalyst with low decomposition ability include Ni, Mo, Co, W, and P. The catalyst with low decomposition ability may have one of the active metal or two or higher of such active metals. The catalyst with low decomposition ability preferably contains at least Ni, more preferably contains Ni and Mo or W from the viewpoint of allowing the high-boiling point oil to be more efficiently hydrogenolyzed. The active metal may be activated by sulfurization treatment. A sulfide of, in particular, Ni among the above metals is contained to allow such a desulfurization-denitrogenation catalyst to more easily realize excellent hydrogenation performance.

In the hydrogenolysis step, the catalyst for desulfurization-denitrogenation may be used in combination with a decomposition catalyst. As the decomposition catalyst, the catalyst with high decomposition ability and the catalyst with low decomposition ability may be used in combination, only the catalyst with high decomposition ability may be used, or only the catalyst with low decomposition ability may be used. The catalyst for desulfurization-denitrogenation may be located at least on the former stages of the catalyst with high decomposition ability and the catalyst with low decomposition ability, or may be located on both the former stages and the latter stages of the catalyst with high decomposition ability and the catalyst with low decomposition ability.

In a case where the raw oil in the hydrogenolysis step contains the nitrogen fraction, the nitrogen fraction in the raw oil can be attached to active sites of the catalyst with high decomposition ability and the catalyst with low decomposition ability to cause the catalyst with high decomposition ability and the catalyst with low decomposition ability to be deteriorated in decomposition performance. When the raw oil is contacted with the desulfurization-denitrogenation catalyst, the nitrogen fraction contained in the raw oil is converted to ammonia or the like to allow the nitrogen fraction contained in the raw oil to be reduced. Accordingly, in the hydrogenolysis step, the desulfurization-denitrogenation catalyst is preferably placed on the former stage as compared with the catalyst with high decomposition ability and the catalyst with low decomposition ability. In other words, the desulfurization-denitrogenation catalyst is preferably placed on the former stage of a hydrogenolysis unit described later. This placement can inhibit the catalyst with high decomposition ability and the catalyst with low decomposition ability from being deteriorated in decomposition performance even in a case where the nitrogen fraction is contained in the raw oil.

The hydrogenolysis step may be carried out with, for example, a flow-type reactor. Here, the flow-type reactor preferably includes a first catalyst layer containing the catalyst for desulfurization-denitrogenation and a second catalyst layer containing a catalyst with decomposition ability in the listed order from the inlet side. A third catalyst layer containing a catalyst with different decomposition ability and a fourth catalyst layer containing the catalyst for desulfurization-denitrogenation may be further placed on the latter stage of the second catalyst layer.

The reaction temperature in the hydrogenolysis step is not particularly limited, may be, for example, 300°C or higher, and is preferably 320°C or higher, more preferably 340°C or higher. The reaction temperature in the hydrogenolysis step may be, for example, 480°C or lower, and is preferably 460°C or lower, more preferably 440°C or lower. In other words, the reaction temperature in the hydrogenolysis step may be, for example, 300 to 480°C, 300 to 460°C, 300 to 440°C, 320 to 480°C, 320 to 460°C, 320 to 440°C, 340 to 480°C, 340 to 460°C or 340 to 440°C.

The reaction pressure in the hydrogenolysis step is not particularly limited, and may be, for example, 1 MPaG or higher, and is preferably 3 MPaG or higher, more preferably 5 MPaG or higher. The reaction pressure in the hydrogenolysis step is not particularly limited, and may be, for example, 20 MPaG or lower, and is preferably 19 MPaG or lower, more preferably 18 MPaG or lower.

In other words, the reaction pressure in the hydrogenolysis step may be, for example, 1 to 20 MPaG, 1 to 19 MPaG, 1 to 18 MPaG, 3 to 20 MPaG, 3 to 19 MPaG, 3 to 18 MPaG, 5 to 20 MPaG, 5 to 19 MPaG or 5 to 18 MPaG.

When the hydrogenolysis step is carried out with the flow-type reactor, the weight hourly space velocity (WHSV) of the raw oil may be, for example, 0.1 h⁻¹ or higher, and is preferably 0.15 h⁻¹ or higher, more preferably 0.2 h⁻¹ or higher. The weight hourly space velocity (WHSV) of the raw oil may be, for example, 5 h⁻¹ or lower, and is preferably 4 h⁻¹ or lower, more preferably 3 h⁻¹ or lower.

In other words, the weight hourly space velocity (WHSV) of the raw oil may be 0.1 to 5 h⁻¹, 0.1 to 4 h⁻¹, 0.1 to 3 h⁻¹, 0.15 to 5 h⁻¹, 0.15 to 4 h-¹, 0.15 to 3 h⁻¹, 0.2 to 5 h⁻¹, 0.2 to 4 h⁻¹ or 0.2 to 3 h⁻¹.

The hydrogenolysis step is carried out in the presence of hydrogen. When the hydrogenolysis step is carried out with the flow-type reactor, the hydrogen/oil ratio may be, for example, 100 NL/L or higher, and is preferably 150 NL/L or higher, more preferably 200 NL/L or higher. The hydrogen/oil ratio may be, for example, 1500 NL/L or lower, and is preferably 1400 NL/L or lower, more preferably 1300 NL/L or lower.

In other words, the hydrogen/oil ratio may be, for example, 100 to 1500 NL/L, 100 to 1400 NL/L, 100 to 1300 NL/L, 150 to 1500 NL/L, 150 to 1400 NL/L, 150 to 1300 NL/L, 200 to 1500 NL/L, 200 to 1400 NL/L or 200 to 1300 NL/L.

In the hydrogenolysis step, a second gas fraction, and a light fraction having a boiling point of 350°C or lower and a heavy fraction having a boiling point of higher than 350°C are obtained by hydrogenolysis of the raw oil.

The second gas fraction may be, for example, a component which is gaseous at normal temperature, 20°C, in a product generated by hydrogenolysis. The second gas fraction may contain, for example, hydrogen, a hydrocarbon having 1 to 4 carbon atoms, or the like.

The second gas fraction may be utilized in, for example, a combustion gas for heating a pyrolysis section in the pyrolysis step or a combustion gas of a heating furnace in any other step.

The light fraction may be, for example, hydrocarbon oil having a boiling point of 350°C or lower in the product generated by hydrogenolysis. The light fraction is subjected to the steam cracking step.

The sulfur fraction in the light fraction is, for example, 1500 ppm by mass or lower, and is preferably 1000 ppm by mass or lower, more preferably 900 ppm by mass or lower from the viewpoint of a reduction in amount of impurities in the chemical product obtained in the cracking step, prevention of catalyst poisoning on the latter stage of the cracking step, and prevention of apparatus corrosion.

The nitrogen fraction in the light fraction is, for example, 25 ppm by mass or lower, and is preferably 20 ppm by mass or lower, more preferably 15 ppm by mass or lower from the viewpoint of a reduction in amount of impurities in the chemical product obtained in the cracking step, prevention of catalyst poisoning on the latter stage of the cracking step and prevention of apparatus corrosion.

The chlorine fraction in the light fraction is, for example, 20 ppm by mass or lower, and is preferably 15 ppm by mass or lower, more preferably 10 ppm by mass or lower from the viewpoint of a reduction in amount of impurities in the chemical product obtained in the cracking step, prevention of catalyst poisoning on the latter stage of the cracking step and prevention of apparatus corrosion. Not only the chlorine fraction, but also any other halogen element fraction is preferably in the same range.

The heavy fraction may be, for example, hydrocarbon oil having a boiling point of higher than 350°C in the product generated by hydrogenolysis.

The heavy fraction may be, for example, reused as one portion or all of the raw oil in the low-temperature hydrogenation step and the hydrogenolysis step. The heavy fraction may be, for example, utilized for combustion oil for heating a pyrolysis section in the pyrolysis step, combustion oil in a heating furnace in any other step, or the like, or treated in an FCC apparatus in any other petroleum refining.

### (Steam cracking step)

The steam cracking step is a step of subjecting steam cracking raw oil containing one portion of the light fraction obtained in the hydrogenolysis step, to steam cracking treatment, to obtain a chemical product, and a raw material for carbide production, containing a heavy distillate fraction having a 10% distillation temperature of 190°C or higher. In the steam cracking step, the steam cracking raw oil is heat-treated together with steam to decompose the light fraction or the like, thereby producing a component useful as a chemical product. The heavy distillate fraction having a 10% distillation temperature of 190°C or higher, obtained in the steam cracking step, can be suitably used as a raw material for carbide production.

In the steam cracking step, one portion of the light fraction obtained in the hydrogenolysis step may be subjected to steam cracking treatment, or all thereof may be subjected to steam cracking treatment. The steam cracking raw oil in the steam cracking step may further contain ethane, naphtha, kerosene oil, a diesel oil distillate fraction and/or the like derived from petroleum and/or the like, in addition to the light fraction. In the steam cracking step, the light fraction may be directly used as the steam cracking raw oil.

Conditions of the steam cracking treatment are not particularly limited, and may be appropriately selected from known conditions adopted in steam cracking treatment of ethane, naphtha, kerosene/diesel oil, or the like.

The reaction temperature of the steam cracking treatment may be, for example, 650°C or higher, and is preferably 700°C or higher, more preferably 750°C or higher. The reaction temperature of the steam cracking treatment may be, for example, 1000°C or lower, and is preferably 950°C or lower, more preferably 900°C or lower. In other words, the reaction temperature of the steam cracking treatment may be, for example, 650 to 1000°C, 650 to 950°C, 650 to 900°C, 700 to 1000°C, 700 to 950°C, 700 to 900°C, 750 to 1000°C, 750 to 950°C or 750 to 900°C.

The reaction time (retention time) of the steam cracking treatment may be, for example, 0.05 seconds or higher, and is preferably 0.06 seconds or higher, more preferably 0.08 seconds or higher. The reaction time of the steam cracking treatment may be, for example, 2.0 seconds or lower, and is preferably 1.9 seconds or lower, more preferably 1.8 seconds or lower.

In other words, the reaction time of the steam cracking treatment may be, for example, 0.05 to 2.0 seconds, 0.05 to 1.9 seconds, 0.05 to 1.8 seconds, 0.06 to 2.0 seconds, 0.06 to 1.9 seconds, 0.06 to 1.8 seconds, 0.08 to 2.0 seconds, 0.08 to 1.9 seconds or 0.08 to 1.8 seconds.

The ratio (mass ratio) of steam/steam cracking raw oil in steam cracking treatment may be, for example, 0.2 or higher, and is preferably 0.25 or higher, more preferably 0.3 or higher. The ratio (mass ratio) of steam/steam cracking raw oil may be, for example, 1.0 or lower, and is preferably 0.9 or lower, more preferably 0.8 or lower.

In other words, the ratio (mass ratio) of steam/steam cracking raw oil may be, for example, 0.2 to 1.0, 0.2 to 0.9, 0.2 to 0.8, 0.25 to 1.0, 0.25 to 0.9, 0.25 to 0.8, 0.3 to 1.0, 0.3 to 0.9 or 0.3 to 0.8.

The outlet reaction pressure of the steam cracking treatment may be, for example, 0.1 MPaA or higher, and is preferably 0.15 MPaA or higher, more preferably 0.2 MPaA or higher. The reaction pressure of the steam cracking treatment may be, for example, 1.0 MPaA or lower, and is preferably 0.8 MPaA or lower, more preferably 0.6 MPaA or lower.

In other words, the outlet reaction pressure of the steam cracking treatment may be, for example, 0.1 to 1.0 MPaA, 0.1 to 0.8 MPaA, 0.1 to 0.6 MPaA, 0.15 to 1.0 MPaA, 0.15 to 0.8 MPaA, 0.15 to 0.6 MPaA, 0.2 to 1.0 MPaA, 0.2 to 0.8 MPaA or 0.2 to 0.6 MPaA.

Examples of the chemical product obtained in the steam cracking step include ethylene, propylene, butadiene, butenes, isoprene, benzene, toluene, xylene, ethylbenzene, styrene, cyclopentadiene, dicyclopentadiene, and C9 aromatics containing olefins for conversion to resins, such as indene and methylstyrene.

In the steam cracking step, a light distillate fraction may be further obtained in addition to the chemical product. Examples of the light distillate fraction include methane, ethane, propane, butane, pentane, and hexane.

In the steam cracking step, a heavy distillate fraction may be further obtained in addition to the chemical product. The heavy distillate fraction obtained in the steam cracking step in the present embodiment tends to contain a large amount of an aromatic fraction, and can be suitably used as a raw material for carbide (in particular, carbon black) production.

The 10% distillation temperature of the heavy distillate fraction may be, for example, 190°C or higher, or may be 200°C or higher. The 10% distillation temperature of the heavy distillate fraction may be, for example, 250°C or lower, or may be 240°C or lower. The 90% distillation temperature of the heavy distillate fraction may be, for example, 450°C or higher, or may be 500°C or higher. The 90% distillation temperature of the heavy distillate fraction may be, for example, 750°C or lower, or may be 700°C or lower.

In other words, the 10% distillation temperature of the heavy distillate fraction may be, for example, 190 to 250°C, 190 to 240°C, 200 to 250°C or 200 to 240°C. The 90% distillation temperature of the heavy distillate fraction may be, for example, 450 to 750°C, 450 to 700°C, 500 to 750°C or 500 to 700°C.

The aromatic fraction of the heavy distillate fraction may be, for example, 30% by mass or higher, and is preferably 35% by mass or higher, more preferably 40% by mass or higher. The aromatic fraction of the heavy distillate fraction may be, for example, 90% by mass or lower.

In other words, the aromatic fraction of the heavy distillate fraction may be, for example, 30 to 90% by mass, 35 to 90% by mass or 40 to 90% by mass.

The steam cracking step may be carried out with, for example, a steam cracking apparatus including a reactor.

### (Carbide production step)

The production method of the present embodiment may further include a carbide production step of obtaining a carbide through pyrolysis or incomplete combustion of the raw material for carbide production.

The raw material for carbide production obtained in the steam cracking step contains a large amount of an aromatic fraction, and therefore a carbide (in particular, carbon black) excellent in amount of production tends to be easily obtained.

The pyrolysis or incomplete combustion in the carbide production step can be carried out, for example, by a method in which a soft carbon black production apparatus disclosed in JPS6134071A (applicant: Asahi Carbon Co., Ltd.) is used and a heavy distillate fraction obtained in the steam cracking step is sprayed and introduced into a combustion reaction chamber containing high-temperature oxygen and then rapidly cooled with water or the like. Herein, the incomplete combustion can be called combustion under a low oxygen concentration atmosphere. The low oxygen concentration is a concentration lower than the oxygen concentration in the air (about 21% by volume).

The temperature of the pyrolysis or incomplete combustion in the carbide production step is not particularly limited, may be, for example, 1200°C or higher, or may be 1300°C or higher, 1400°C or higher or 1500°C or higher. The temperature of the pyrolysis or incomplete combustion in the carbide production step may be, for example, 1900°C or lower, or may be 1800°C or lower, 1700°C or lower or 1600°C or lower.

In other words, the temperature of the pyrolysis or incomplete combustion in the carbide production step may be, for example, 1200 to 1900°C, 1200 to 1800°C, 1200 to 1700°C, 1200 to 1600°C, 1300 to 1900°C, 1300 to 1800°C, 1300 to 1700°C, 1300 to 1600°C, 1400 to 1900°C, 1400 to 1800°C, 1400 to 1700°C, 1400 to 1600°C, 1500 to 1900°C, 1500 to 1800°C, 1500 to 1700°C or 1500 to 1600°C.

The carbide obtained in the carbide production step is, for example, carbon black.

Fig. 2 is an outline drawing illustrating one example of a system carrying out the production method of the present embodiment. A system 100 illustrated in Fig. 2 includes a pyrolysis unit 110, a first separation unit 111, a pulverization unit 112, a low-temperature hydrogenation unit 115, a hydrogenolysis unit 120, a second separation unit 121, a steam cracker 130 and a carbide production unit 140.

In the system 100, first, a waste material S1 is fed to the pyrolysis unit 110, and the waste material S1 is pyrolyzed in the pyrolysis unit 110. In the pyrolysis unit 110, a first gas fraction S2, pyrolysis oil S3, and a mixture S4 of a residue fraction and a metal fraction are produced. The first gas fraction S2 may be discharged to the outside of the system and may be reused as an oxygen-free gas in the pyrolysis unit 110. The pyrolysis oil S3 is fed to the hydrogenolysis unit 120. The mixture S4 is fed to the first separation unit 111, and separated into a residue fraction S5 and a metal fraction S6 in the first separation unit 111. The residue fraction S5 is pulverized in the pulverization unit 112, and recovered as a powdery carbide S7.

In the low-temperature hydrogenation unit 115, low-temperature hydrogenated oil S8 is generated by low-temperature hydrotreatment of the pyrolysis oil S3. The low-temperature hydrogenated oil S8 is fed to the hydrogenolysis unit 120.

In the hydrogenolysis unit 120, a second gas fraction S9 and hydrogenolysis oil S10 are generated by hydrogenolysis of the pyrolysis oil S3. The second gas fraction S9 may be discharged to the outside of the system, and may also be utilized as a combustion gas for heating a pyrolysis section in the pyrolysis step or a combustion gas of a heating furnace in any other step. The hydrogenolysis oil S10 is fed to the second separation unit 121, and fractionally distilled to a light fraction S11 and a heavy fraction S12 in the second separation unit 121. The light fraction S11 is fed to the steam cracker 130. The heavy fraction S12 may be recovered as a heavy oil fraction, may be reused in the hydrogenolysis unit 120, or may be utilized as combustion oil for heating a pyrolysis section in the pyrolysis step or combustion oil of a heating furnace in any other step. Recycled oil S17 including the light fraction S11 and the heavy fraction S12 may be reused in the low-temperature hydrogenation unit 115.

In the steam cracker 130, a product gas S13, product oil S14 and a heavy distillate fraction S15 are formed by steam cracking treatment of the light fraction S11. The product gas S13 and the product oil S14 include ethylene, propylene, butadiene, butenes, isoprene, benzene, toluene, xylene, ethylbenzene, styrene, cyclopentadiene, dicyclopentadiene, C9 aromatic fractions containing olefins for conversion to resins, such as indene and methylstyrene, and/or the like, each useful as a chemical product, and the chemical product is obtained by appropriately separating and recovering the product gas S13 and the product oil S14. The heavy distillate fraction S15 is fed to the carbide production unit 140. In the carbide production unit 140, carbide S16 is formed through pyrolysis of the heavy distillate fraction S15.

### (Method for producing synthetic rubber)

A method for producing butadiene of the present embodiment includes a polymerization step of obtaining synthetic rubber by a polymerization reaction in which butadiene obtained by the above production method is used as at least one portion of a raw material of the synthetic rubber.

In the polymerization step, synthetic rubber can be obtained by polymerizing a composition for polymerization, containing at least butadiene as a monomer, by a conventionally known method. The polymerization method is not particularly limited, and conventionally known methods such as emulsion polymerization, solution polymerization, suspension polymerization, and bulk polymerization can be used. Polymerization conditions are not particularly limited, and can be appropriately modulated depending on the polymerization method, the compositional ratio of the composition for polymerization, and/or the like.

The monomer may be singly butadiene, or any other monomer for conventionally known synthetic rubber may also be used in addition to butadiene, depending on the compositional ratio and characteristics of objective synthetic rubber. Examples of such any other monomer for other synthetic rubber include a conjugated diene compound other than butadiene, and an aromatic vinyl compound.

Examples of the conjugated diene compound other than butadiene include isoprene, 2,3-dimethyl-1,3-butadiene, 1,3-pentadiene, 1,3-hexadiene, 1,3-heptadiene, 2-phenyl-1,3-butadiene, 3-methyl-1,3-pentadiene, and 2-chloro-1,3-butadiene. The conjugated diene compound other than butadiene may be used singly or in combination of two or higher kinds thereof.

Examples of the aromatic vinyl compound include styrene, 2-methylstyrene, 3-methylstyrene, 4-methylstyrene, α-methylstyrene, 2,4-dimethylstyrene, 2,4-diisopropylstyrene, 4-t-butylstyrene, 5-t-butyl-2-methylstyrene, vinylethylbenzene, divinylbenzene, trivinylbenzene, divinylnaphthalene, t-butoxystyrene, vinylbenzyldimethylamine, (4-vinylbenzyl)dimethylaminoethyl ether, N,N-dimethylaminoethylstyrene, N,N-dimethylaminomethylstyrene, 2-ethylstyrene, 3-ethylstyrene, 4-ethylstyrene, 2-t-butylstyrene, 3-t-butylstyrene, 4-t-butylstyrene, vinylxylene, vinylnaphthalene, vinylpyridine, diphenylethylene, and tertiary amino group-containing diphenylethylene (for example, 1-(4-N,N-dimethylaminophenyl)-1-phenylethylene). The aromatic vinyl compound may be used singly or in combination of two or higher kinds thereof.

The composition for polymerization may contain, in addition to the monomer, conventionally known additive, solvent, and/or the like. Examples of the additive include a polymerization initiator, an emulsifier, and a surfactant.

Examples of the polymerization initiator include an alkali metal compound. Specific examples of the alkali metal compound include alkyllithium such as methyllithium, ethyllithium, n-propyllithium, n-butyllithium, sec-butyllithium, and t-butyllithium; 1,4-dilithiobutane, phenyllithium, stilbene lithium, naphthyllithium, 1,3-bis(1-lithio-1,3-dimethylpentyl)benzene, 1,3-phenylenebis(3-methyl-1-phenylpentylidene)dilithium, naphthylsodium, naphthylpotassium, and ethoxypotassium.

### (Tire)

A tire of the present embodiment includes the synthetic rubber obtained by the method for producing synthetic rubber.

### (Method for producing tire)

A method for producing a tire of the present embodiment includes a vulcanization step of obtaining a tire by a vulcanization reaction in which synthetic rubber obtained by the above method for producing synthetic rubber is used as at least one portion of a raw material of the tire.

In the vulcanization step, a tire can be obtained by vulcanizing a composition for vulcanization, containing at least synthetic rubber, by a conventionally known method. Vulcanization conditions are not particularly limited, and can be appropriately modulated depending on the compositional ratio of the composition for vulcanization, the objective tire shape and structure, and the like.

The composition for vulcanization may contain, in addition to the synthetic rubber, a conventionally known additive. Examples of the additive include a vulcanizing agent, a vulcanization promoter, a vulcanization promotion aid, an anti-aging agent, a softener, an antioxidant, and a colorant. Such additives may be used singly or in combination of two or higher kinds thereof.

Examples of the vulcanizing agent include sulfur-based vulcanizing agents such as powdered sulfur, precipitated sulfur, highly dispersible sulfur, surface-treated sulfur, insoluble sulfur, dimorpholine disulfide, and alkylphenol disulfide, zinc oxide, magnesium oxide, litharge, p-quinonedioxim, p-dibenzoylquinonedioxime, tetrachloro-p-benzoquinone, poly-p-dinitrobenzene, methylenedianiline, a phenol resin, a brominated alkylphenol resin, and a chlorinated alkylphenol resin.

Examples of the vulcanization promoter include thiuram-based vulcanization promoters such as tetramethylthiuram disulfide (TMTD), tetraethylthiuram disulfide (TETD), and tetramethylthiuram monosulfide (TMTM), aldehyde-ammonia-based vulcanization promoters such as hexamethylenetetramine, guanidine-based vulcanization promoters such as diphenylguanidine (DPG), thiazole-based vulcanization promoters such as 2-mercaptobenzothiazole (MBT) and dibenzothiazyl disulfide (DM), sulfenamide-based vulcanization promoters such as N-cyclohexyl-2-benzothiazylsulfenamide (CBS) and N-t-butyl-2-benzothiazylsulfenamide (BBS), and dithiocarbamate-based vulcanization promoters such as zinc dimethyldithiocarbamate (ZnPDC).

Examples of the vulcanization promotion aid include fatty acid, fatty acid zinc, a fatty acid zinc salt, and zinc oxide. The fatty acid used here can be acetic acid, propionic acid, butanoic acid, stearic acid, acrylic acid, maleic acid, or the like. The fatty acid zinc used here can be zinc acetate, zinc propionate, zinc butyrate, zinc stearate, zinc acrylate, zinc maleate, or the like.

Examples of the anti-aging agent include aliphatic and aromatic hindered amine-based and hindered phenol-based compounds.

Examples of the antioxidant include butyl hydroxytoluene (BHT) and butyl hydroxyanisole (BHA).

Examples of the colorant include inorganic pigments such as titanium dioxide, zinc oxide, ultramarine blue, colcothar, lithopone, lead, cadmium, iron, cobalt, aluminum, hydrochloride, and sulfate, azo pigments, and copper phthalocyanine pigments.

The shape, the structure, the size and the material of the tire are not particularly limited, and can be appropriately selected depending on the intended use. The application of the tire is not particularly limited, and examples thereof include a passenger car tire, a heavy-duty tire, a motorcycle (motor bicycle) tire, and a studless tire.

### (Method for managing renewable product)

In recent years, in order to sell environment-conscious products with plant-derived raw materials, recycled materials or the like in more appealing forms, a procedure called mass balance system (hereinafter, also referred to as material balance system) has attracted attention in various industries such as the chemical industry, the steel industry, and the aluminum industry.

Each product generated by using the production method of the present invention, with used tires, is also demanded to be assigned to the value of a renewable product with a mass balance system by a simple and reliable method.

The present invention provides a management method in which, when a chemical product is produced by using the production method of the present invention, a value as a renewable product can be assigned to each product depending on the content rate of a renewable raw material contained in used tires, by a simple and reliable method.

Herein, the "renewable raw material" refers to a raw material from renewable organic resources. The renewable raw material is not intended to be limited to only those derived from biological resources, and is widely interpreted as long as it corresponds to any renewable organic resource. For example, even a petroleum-derived product, for example, one derived from a recycled product with a petroleum-derived product as a raw material, like used tires, is also intended to be included.

The mass balance system here refers to, for example, a procedure in which, when a raw material having a specific characteristic for a biomass raw material is mixed with a raw material not having such a characteristic in a distribution-processing step from raw materials to products, such a characteristic is assigned as a credit to some products depending on the content rate of the raw material having such a characteristic.

Since the mass balance system (material balance system) is a system in which assignment with a biomass distillate fraction as a credit is arbitrarily performed by a manufacturer, it is common to verify the validity with authentication by a third-party certifier. As the third-party certifier, ISCC (International Sustainability & Carbon Certification) and RSB (Roundtable on Sustainable Biomaterials) are present.

### (Method for managing chemical product, to be executed with management apparatus)

The method for managing a chemical product of the present invention can be used in the production of a chemical product with used tires.

The management method of the present invention is a method for assigning a value as a renewable product with a mass balance system, to a chemical product, with a management apparatus depending on the content rate of a renewable raw material contained in used tires.

The management method of the present invention includes, for example, a step (V) of confirming that a chemical product is obtained, with a management apparatus described later, step (V) (allowing the management apparatus to acquire information showing that a chemical product is obtained with used tires), and a step (Z) of allowing the management apparatus to confirm the proportion of a product to which a value as a renewable product is assigned (allowing the management apparatus to acquire information showing a proportion of a product to which a value as a renewable product is assigned).

The step (V) of confirming that a chemical product is obtained includes the following step (V-1), the following step (V-2), the following step (V-3), the following step (V-4), and the following step (V-5).

The step (V-1) is a step of allowing the management apparatus to confirm that pyrolysis oil is produced from the used tires loaded to a pyrolysis unit in which the pyrolysis oil is obtained by subjecting the used tires to pyrolysis processing at 350°C or higher and 750°C or lower.

The step (V-2) is a step of allowing the management apparatus to confirm that low-temperature hydrogenated oil is produced from the pyrolysis oil loaded to a low-temperature hydrogenation unit in which raw oil containing at least one portion of the pyrolysis oil is subjected to low-temperature hydrotreatment at 180°C or higher and 350°C or lower to obtain the low-temperature hydrogenated oil.

The step (V-3) is a step of allowing the management apparatus to confirm that a light fraction having a boiling point of 350°C or lower is produced from the low-temperature hydrogenated oil loaded to a hydrogenolysis unit in which raw oil containing at least one portion of the low-temperature hydrogenated oil is subjected to hydrogenolysis treatment at a higher temperature than that in the low-temperature hydrotreatment to obtain the light fraction.

The step (V-4) is a step of allowing the management apparatus to confirm that the chemical product is obtained from the light fraction loaded to a steam cracker in which steam cracking raw oil containing at least one portion of the light fraction is subjected to steam cracking treatment.

The step (V-5) is a step of allowing the management apparatus to confirm that the chemical product is obtained from the used tires by treatment in the order of the pyrolysis unit, the low-temperature hydrogenation unit, the hydrogenolysis unit, and the steam cracker.

The step (Z) of confirming the proportion of a product to which a value as a renewable product is assigned includes the following step (Z-1), the following step (Z-2), the following step (Z-3), and the following step (Z-4).

The step (Z-1) is a step of allowing the management apparatus to select a product to be assigned as a renewable product in a product obtained by the steam cracker.

The step (Z-2) is a step of allowing the management apparatus to determine a value of proportion (P) to be assigned as a renewable product in the proportion of the product selected in the step (Z-1) relative to the product obtained by the steam cracker.

The step (Z-3) is a step of allowing the management apparatus to grasp a value of content rate (Q) of a renewable raw material contained in the used tires.

The step (Z-4) is a step of allowing the management apparatus to compare the value of proportion (P) and the value of content rate (Q) to confirm that the value of proportion (P) is equal to or lower than the value of content rate (Q).

One example of embodiments of the method for managing a chemical product, to be executed with a management apparatus (in particular, a method for assigning a value as a renewable product) is described.

Step (Z-1): when the product obtained by the steam cracker corresponds to ethylene, propylene, butadiene, and any other product, butadiene is selected.

Step (Z-2): it is assumed that the product obtained by the steam cracker corresponds to ethylene, propylene, butadiene, and any other product and the proportion of such each product satisfies ethylene: 10% by mass, propylene: 10% by mass, butadiene: 10% by mass, and any other product: 70% by mass. The proportion (P) of assignment as a renewable product in 10% by mass of the butadiene product is here determined.

Step (Z-3): when a renewable raw material occupies 5% by mass and a raw material which is not renewable occupies 95% by mass in the used tires, the content rate (Q) of the renewable raw material is grasped (acquired) to be 5% by mass.

Step (Z-4): the value of proportion (P) and the value of content rate (Q) are compared and the value of proportion (P) is confirmed to be equal to or lower than the value of content rate (Q). When the content rate (Q) of the renewable raw material is here assumed to be 5% by mass, the proportion (P) of assignment as a renewable product, with respect to butadiene, is assumed to be 5% by mass or lower.

In other words, when the content rate (Q) of the renewable raw material is assumed to be 5% by mass, 5% by mass in 10% by mass of a butadiene product assigned as a renewable product can be assigned as renewable butadiene.

Thus, a value as a renewable product can be assigned to a butadiene product in a product obtained by a steam cracker, depending on the content rate of a renewable raw material contained in used tires.

It is here regarded by the third-party certifier that, in the mass balance system (material balance system), a butadiene product at a rate where (P) % by mass is excluded from 10% by mass (10 - (P) % by mass of a butadiene product), although also actually contains a renewable component, is not renewable butadiene because a credit of 100% renewable butadiene is assigned to (P)% by mass of butadiene.

A value of content rate (Q) of 5% by mass in the case of the renewable raw material and a value of 10% by mass of content rate (Q) in the case of the butadiene product, as described above, are values conveniently set for easy understanding of the present invention, and these values are not limited thereto.

### <Management apparatus, management program>

The management method of the present invention can be executed with the management apparatus as described above. The treatment in each of the steps of the management method, to be performed with the management apparatus, is executed with a computer having a control section constituting the management apparatus.

The management apparatus in which the management method of the present invention is executed, and the management program (computer program) executed with the computer of the management apparatus are described below.

Preferred embodiments of the management apparatus of the present invention include the following management apparatus.
"An apparatus for managing a chemical product, for use in the production of a chemical product with used tires, wherein
the management apparatus is an apparatus for assigning a value as a renewable product with a mass balance system, to the chemical product, depending on a content rate of a renewable raw material contained in the used tires,
the management apparatus has a confirmation section (I) which confirms that the chemical product is obtained,
   the confirmation section (I) includes the following tool (V-1), the following tool (V-2), the following tool (V-3), the following tool (V-4), and the following tool (V-5),
   the tool (V-1) is a tool for confirming that pyrolysis oil is produced from the used tires loaded to a pyrolysis unit in which the pyrolysis oil is obtained by subjecting the used tires to pyrolysis processing at 350°C or higher and 750°C or lower,
   the tool (V-2) is a tool for confirming that low-temperature hydrogenated oil is produced from the pyrolysis oil loaded to a low-temperature hydrogenation unit in which raw oil containing at least one portion of the pyrolysis oil is subjected to low-temperature hydrotreatment at 180°C or higher and 350°C or lower to obtain the low-temperature hydrogenated oil,
   the tool (V-3) is a tool for confirming that a light fraction having a boiling point of 350°C or lower is produced from the low-temperature hydrogenated oil loaded to a hydrogenolysis unit in which raw oil containing at least one portion of the low-temperature hydrogenated oil is subjected to hydrogenolysis treatment at a higher temperature than that in the low-temperature hydrotreatment to obtain the light fraction,
   the tool (V-4) is a tool for confirming that the chemical product is obtained from the light fraction loaded to a steam cracker in which steam cracking raw oil containing at least one portion of the light fraction is subjected to steam cracking treatment, and
   the tool (V-5) is a tool for confirming that the chemical product is obtained from the used tires by treatment in the order of the pyrolysis unit, the low-temperature hydrogenation unit, the hydrogenolysis unit, and the steam cracker,
the management apparatus has a confirmation section (I) for confirming a proportion of a product to which a value as a renewable product is assigned,
   the confirmation section (I) includes the following tool (Z-1), the following tool (Z-2), the following tool (Z-3), and the following tool (Z-4),
   the tool (Z-1) is a tool for selecting a product to be assigned as a renewable product in a product obtained by the steam cracker,
   the tool (Z-2) is a tool for determining a value of proportion (P) to be assigned as a renewable product in a proportion of the product selected in the tool (Z-1) relative to the product obtained by the steam cracker,
   the tool (Z-3) is a tool for grasping a value of content rate (Q) of a renewable raw material contained in the used tires, and
   the tool (Z-4) is a tool for confirming that the value of proportion (P) is equal to or lower than the value of content rate (Q) by comparing the value of proportion (P) and the value of content rate (Q)".

Preferred embodiments of the management program of the present invention include the following management program.

"A program for managing a chemical product, to be executed with a management apparatus, for use in the production of a chemical product with used tires, wherein
the management program is a program for assigning a value as a renewable product with a mass balance system, to the chemical product, with the management apparatus depending on a content rate of a renewable raw material contained in the used tires,
the management program allows a computer to execute the following processing
   (V-1): confirming that pyrolysis oil is produced from the used tires loaded to a pyrolysis unit in which the pyrolysis oil is obtained by subjecting the used tires to pyrolysis processing at 350°C or higher and 750°C or lower,
   (V-2): a step of confirming that low-temperature hydrogenated oil is produced from the pyrolysis oil loaded to a low-temperature hydrogenation unit in which raw oil containing at least one portion of the pyrolysis oil is subjected to low-temperature hydrotreatment at 180°C or higher and 350°C or lower to obtain the low-temperature hydrogenated oil,
   (V-3): a step of confirming that a light fraction having a boiling point of 350°C or lower is produced from the low-temperature hydrogenated oil loaded to a hydrogenolysis unit in which raw oil containing at least one portion of the low-temperature hydrogenated oil is subjected to hydrogenolysis treatment at a higher temperature than that in the low-temperature hydrotreatment to obtain the light fraction,
   (V-4): a step of confirming that the chemical product is obtained from the light fraction loaded to a steam cracker in steam cracking treatment of steam cracking raw oil containing at least one portion of the light fraction, and
   (V-5): a step of confirming that the chemical product is obtained from the used tires by treatment in the order of the pyrolysis unit, the low-temperature hydrogenation unit, the hydrogenolysis unit, and the steam cracker, and
the management program, in which
the management method includes a step (Z) of confirming a proportion of a product to which a value as a renewable product is assigned,
(Z-1): selecting a product to be assigned as a renewable product in a product obtained by the steam cracker,
(Z-2): determining a value of proportion (P) to be assigned as a renewable product in a proportion of the product selected in the step (Z-1) relative to the product obtained by the steam cracker,
(Z-3): grasping a value of content rate (Q) of a renewable raw material contained in the used tires, and
(Z-4): confirming that the value of proportion (P) is equal to or lower than the value of content rate (Q) by comparing the value of proportion (P) and the value of content rate (Q)".

### <<Management apparatus>>

The management apparatus is an apparatus for executing the management method of the present invention, as described above.

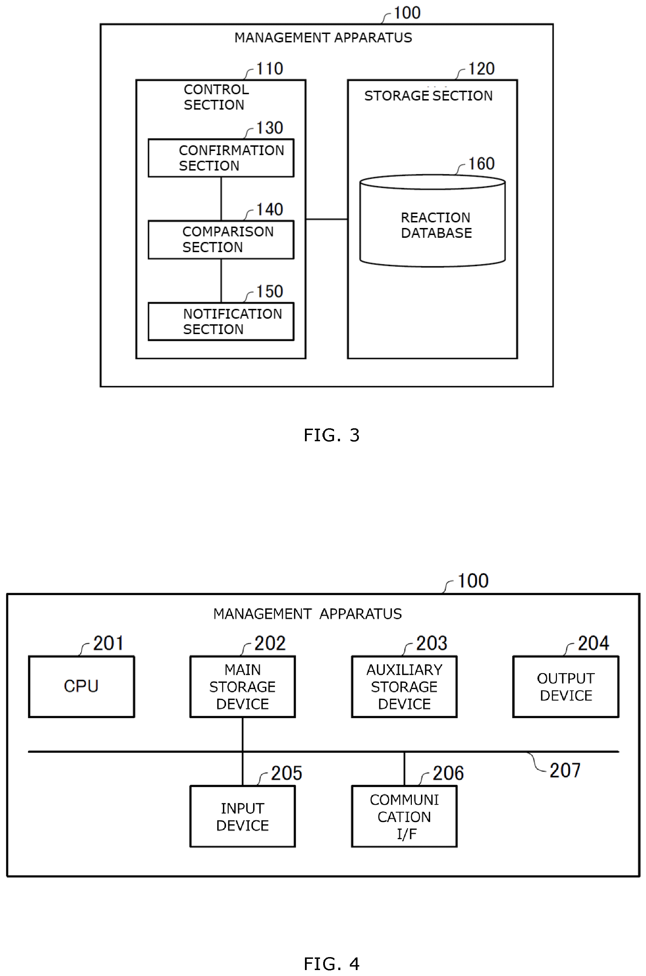

Preferred embodiments of the management apparatus are described based on Fig. 3.

A management apparatus 100 has a control section 110 and a storage section 120.

The control section 110 has a confirmation section (I) 130, a comparison section 140, and a notification section (output section) 150, and the storage section 120 has a reaction database 160.

A hardware configuration and a function configuration of the management apparatus 100 are described.

### <<Hardware configuration of management apparatus>>

Fig. 4 is a block diagram illustrating one example of the hardware configuration of the management apparatus 100.

As illustrated in Fig. 4, the management apparatus 100 has each of the following sections. The sections are each connected via a bus 207.

A CPU 201 is a processing apparatus (computer) which performs various controls and calculations. The CPU 201 executes OS and a computer program stored in a main storage device 202 or the like and thus realizes various functions. In other words, the CPU 201 is configured so as to execute the management program and thus function as the control section 110 of the management apparatus to execute the management method in the present embodiment.

The CPU 201 controls operating of the entire management apparatus 100. The apparatus which controls operating of the entire management apparatus 100 is defined as the CPU 201 in the present embodiment, but not limited thereto, and may also be, for example, a FPGA (Field Programmable Gate Array).

The management program and various databases are not optionally necessarily stored in the main storage device 202, an auxiliary storage device 203, and the like. The management program and various databases may be stored in any other information processor and the like connected to the management apparatus 100 via the Internet, LAN (Local Area Network), WAN (Wide Area Network). The management apparatus 100 may also acquire the management program and various databases from such any other information processor and execute the program.

The main storage device 202 is a computer-readable storage medium which stores various programs and stores data necessary for executing such various programs.

The main storage device 202 has ROM and RAM not illustrated.

The ROM stores various programs such as BIOS.

The RAM functions as a work scope which is extended when various programs stored in the ROM are executed by the CPU 201. The RAM can be appropriately selected depending on the object without any limitation. Examples of the RAM include DRAM and SRAM.

The auxiliary storage device 203 is not particularly limited as long as it can store various kinds of information, and can be appropriately selected depending on the object, and examples thereof include a solid-state drive and a hard disc drive. The auxiliary storage device 203 may also be, for example, a portable storage device such as a CD drive, a DVD drive, or a BD drive.

The output device 204 used here can be a display, a speaker, or the like. The display used here is not particularly limited, any known display can be appropriately used, and examples include a liquid crystal display and an organic EL display.

The input device 205 is not particularly limited as long as it can receive various demands for the management apparatus 100, any known input device can be used, and examples include a keyboard, a mouth, and a touch panel.

A communication interface (communication I/F) 206 is not particularly limited, any known communication interface can be used, and examples include a wireless or wired communication device.

The processing function of the management apparatus 100 can be realized by the above hardware configuration.

### <<Function configuration of management apparatus>>

Returning to Fig. 3, a management apparatus 100 has a control section 110 and a storage section 120. The control section 110 controls the entire management apparatus 100.

The control section 110 has a confirmation section (I) 130, a comparison section 140 and a notification section (output section) 150.

The confirmation section (I) of the control section 110 performs the confirming operations described with respect to the tools (V-1) to (V-5).

The confirmation section (I) of the control section 110 performs a confirming operation including selecting a product to be assigned as a renewable product in a product obtained by the steam cracker in the tool (Z-1), determining a value of proportion (P) to be assigned as a renewable product in the proportion occupied by the product selected in the tool (Z-1) relative to the product obtained by the steam cracker, in the tool (Z-2), grasping a value of content rate (Q) of a renewable raw material contained in the used tires, in the tool (Z-3), and comparing the value of proportion (P) and the value of content rate (Q) and confirming that the value of proportion (P) is equal to or lower than the value of content rate (Q) (acquiring information showing that the value of proportion (P) is equal to or lower than the value of content rate (Q)), in the tool (Z-4).

The comparison section 140 of the control section 110 performs a comparison operation including comparing the value of proportion (P) and the value of content rate (Q) in order to allow the confirmation section (I) to perform confirming, in the tool (Z-4).

The notification section 150 of the control section 110 notifies (outputs) that, when the value of proportion (P) is equal to or lower than the value of content rate (Q), a selected product at a rate corresponding to (P) % by mass in the product can be assigned as a renewable product, whereas notifies (outputs) that, when the value of proportion (P) exceeds the value of content rate (Q), such exceeding is achieved.

In other words, the management apparatus 100 is configured so as to execute the management method and then output a result which is acquired by the management method and in which a value as a renewable product relative to a product selected depending on a content rate of a renewable raw material contained in used tires.

The reaction database 160 in the storage section 120 stores information on an apparatus used in the management method of the present invention, and information on a reaction performed in the apparatus. In other words, this storage section 120 includes a computer-readable storage medium storing a computer program, in which the storage medium stores a management program allowing a control section 110 including a computer to execute the management method.

The amount of production and the yield of a product obtained from each apparatus, although can be determined by measurement, not only are obtained as the yield results obtained by actual measurement, but also can be predicted by theoretical calculation or based on the historical data at rest by use of the reaction database 160.

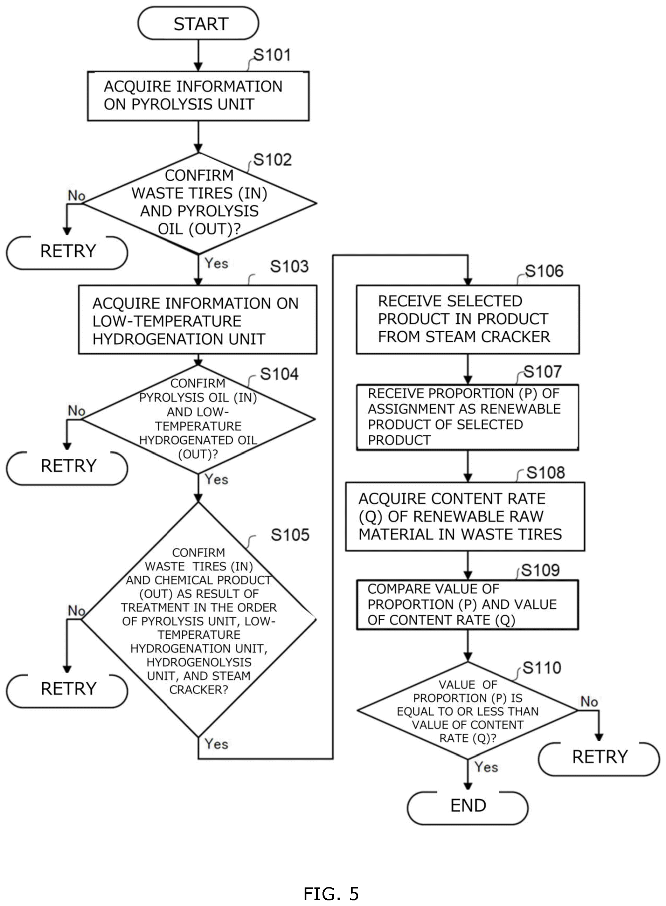

Next, the processing procedure of the management program is described. Fig. 5 is a flowchart illustrating one example of the processing procedure of the management program in the control section 110 of the management apparatus 100. Hereinafter, the description is made with reference to Fig. 5.

In Step S101, the confirmation section 130 of the control section 110 of the management apparatus 100 acquires information on a pyrolysis unit and shifts the processing to Step S102.

In Step S102, the confirmation section 130 of the control section 110 of the management apparatus 100 confirms that pyrolysis oil (OUT) is produced from used tires (IN) in the pyrolysis unit, for example, based on the information output from the pyrolysis unit, and shifts the processing to Step S103 in a case where production is confirmed.

In Step S103, the confirmation section 130 of the control section 110 of the management apparatus 100 acquires information on a low-temperature hydrogenation unit and shifts the processing to Step S104.

In Step S104, the confirmation section 130 of the control section 110 of the management apparatus 100 confirms that low-temperature hydrogenated oil (OUT) is produced from the pyrolysis oil (IN) in the low-temperature hydrogenation unit, for example, based on the information output from the low-temperature hydrogenation unit and production is achieved. Similarly, the confirmation section, when confirms that a light fraction is produced from the low-temperature hydrogenated oil loaded to the hydrogenolysis unit and confirms that a chemical product is obtained from the light fraction loaded to the steam cracker, shifts the processing to Step S105.

In Step S105, the confirmation section 130 of the control section 110 of the management apparatus 100 confirms that the processing is performed in the order of the pyrolysis unit, the low-temperature hydrogenation unit, the hydrogenolysis unit, and the steam cracker, for example, based on the information output from the pyrolysis unit, the low-temperature hydrogenation unit, the hydrogenolysis unit, and the steam cracker, and shifts the processing to Step S106 in a case where it is confirmed from these results that a chemical product (OUT) is produced from the used tires (IN) and production is confirmed.

In Step S106, the confirmation section 130 of the control section 110 of the management apparatus 100 receives information selected by an operator, as one to be assigned as a renewable product in the product generated in the steam cracker, with an input device (input device 205 in Fig. 4) in the management apparatus 100, and shifts the processing to Step S107.

In Step S107, the confirmation section 130 of the control section 110 of the management apparatus 100 receives a value of proportion (P), as one to be assigned as a renewable product set by an operator, in the proportion occupied by the selected product, with an input device (input device 205 in Fig. 4) in the management apparatus 100, and shifts the processing to Step S108.

In Step S108, the confirmation section 130 of the control section 110 of the management apparatus 100 acquires a value of content rate (Q) of a renewable raw material in the used tires loaded to the pyrolysis unit, and shifts the processing to Step S109.

In Step S109, the comparison section 140 of the control section 110 of the management apparatus 100 compares the value of proportion (P) and the value of content rate (Q), and shifts the processing to S110.

In Step S110, the confirmation section 130 of the control section 110 of the management apparatus 100 confirms that the value of proportion (P) is equal to or lower than the value of content rate (Q) based on the result of comparison between the value of proportion (P) and the value of content rate (Q) performed in the comparison section 140 of the control section 110 of the management apparatus 100, and terminates the present processing in a case where the value of proportion (P) is equal to or lower than the value of content rate (Q).

According to completion of the present processing, the value of a renewable product can be assigned to a desired product selected, depending on the content rate of the renewable raw material contained in the used tires. The result assigned is notified to a user via the notification section 150 of the control section 110 of the apparatus 100 for managing a chemical product. In other words, as described above, the apparatus 100 for managing a chemical product is configured so as to execute the method for managing a chemical product and then output a result which is acquired by the method for managing a chemical product and in which a value of a renewable product relative to a product selected depending on a content rate of a renewable raw material contained in used tires is assigned.

In the case of no correspondence to conditions during the present processing, such no correspondence is notified to a user via, for example, the notification section 150 of the control section 110 of the apparatus 100 for managing a chemical product. In this case, an operator can review the type of the product to be selected, review the value of proportion (P) of assignment of the selected product, review the value of content rate (Q) of the renewable raw material, and furthermore review various conditions such as reaction conditions and experiment with the processing again.

Although suitable embodiments of the present invention are described above, the present invention is not limited to the above embodiments.

### EXAMPLES

Hereinafter, the present invention is described in further detail with reference to Example, but the present invention is not limited to these Examples.

In the following Examples, componential analysis and evaluation are performed by the following methods.
· Distillation characteristics: JIS K 2254 (Petroleum product-distillation test method-Part 7, gas chromatographic method)
· Nitrogen fraction: JIS K 2609 (Crude oil and petroleum product-nitrogen fraction test method)
· Chlorine fraction: JPI-5S-64 (Petroleum product-chlorine fraction test method-microcoulometric titration method)
· Sulfur fraction: JIS K 2541-7 (Crude oil and petroleum product-determination of sulfur content, Part 7: Wavelength-dispersive X-ray fluorescence method (Calibration curve method))
· Diene value: ASTM D1961 (Method of Test for Malenic Diene Value of Drying Oils)

A sample to which the above test methods cannot be applied is subjected to estimation by the following methods with ¹HNMR measurement with reference to the method described in JP 2011-80766 A.
1. About 20 mg of a specimen having a known diene value is mixed with 500 µL of deuterochloroform.
2. The value of integral in the range of 6.0 to 6.8 ppm is calculated by ¹HNMR analysis, and corrected to an absolute area per 20 mg of the specimen.
3. The above measurement is performed at several points of the specimen, and a calibration curve of whole area-diene value is created.
4. The whole area of a specimen not having a known diene value is calculated, and the diene value is estimated from the calibration curve of 3.

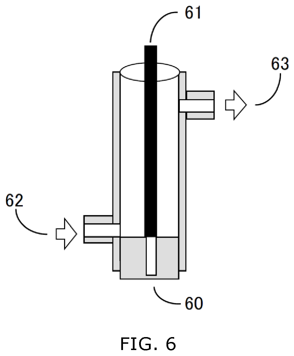

· Iodine value: JIS K 0070 (Test method of acid value, saponification value, ester value, iodine value, hydroxyl value, and unsaponified product of chemical product)
· Total acid value: JIS K 2501 (Petroleum product and lubricant oil-Neutralization test method)
· Heat exchanger contamination evaluation of low-temperature hydrogenated oil after low-temperature hydrogenation step: the width of reduction in temperature (°C) due to contaminating of a test piece 61 of a contamination evaluation tester (HLPS) 60 in heat exchanger contamination evaluation illustrated in Fig. 6 is measured according to the following order.

1. The low-temperature hydrogenated oil at 25°C is allowed to flow from a left bottom section (inlet 62) of the contamination evaluation tester (HLPS) 60 illustrated in Fig. 6, for a certain time (60 minutes).
2. While the temperature of the test piece 61 is constantly kept at 300°C, generation/attachment of contamination on a surface of the test piece 61 is observed. If contamination is attached to the test piece 61, heat conductivity between the low-temperature hydrogenated oil and the test piece 61 deteriorates.
3. The temperature of the low-temperature hydrogenated oil discharged from a right bottom section (outlet 63) of the contamination evaluation tester (HLPS) 60 is measured. The difference between the initial measurement temperature and the measurement temperature after a lapse of a certain time at the outlet 63 is defined as "width of reduction in temperature caused by deterioration in heat conductivity due to contamination".
(Here, the results of Comparative Example 3 correspond to evaluation with respect to the pyrolysis oil not subjected to low-temperature hydrogenation treatment.)
Herein, "heat exchanger contamination evaluation" is performed according to the following criteria.

### (Evaluation criteria)

O: the width of reduction in temperature in evaluation for a certain time (200 minutes) is lower than 10°C, and it is determined that contamination to the heat exchanger is suppressed.
×: the width of reduction in temperature in evaluation for a certain time (200 minutes) is 10°C or higher, and it is determined that contaminating to the heat exchanger is remarkable.

· Steam cracking product gas analysis: JIS K 2301:2011
   (Fuel gas and natural gas-analysis/test method)
· Steam cracking product oil analysis: the steam cracking product oil obtained after oil-water separation is fractionally distilled so that a distillate fraction at 250°C or lower is obtained, and thereafter analyzed according to JIS K 2536-2 (Petroleum product-component test method Part 2: Determination procedure of all components by gas chromatograph).

### (Example 1)

### (1) Pyrolysis step

The pyrolysis step is performed with a pyrolysis apparatus illustrated in Fig. 1.

Specifically, about 100 kg of a cut product (used tires 6) of a tire for trucks is loaded into a pyrolysis furnace 2 (volume 0.5 m³), the interior of the pyrolysis furnace 2 is purged with a nitrogen gas, thereafter the gas temperature is raised to 500°C by a heat exchanger 1 with circulation of a nitrogen gas in the pyrolysis apparatus, and that temperature is retained. The nitrogen gas flow rate introduced into the pyrolysis furnace 2 is set to 0.005 m³/s [ntp], and controlled in a range of 0.0045 m³/s [ntp] to 0.0055 m³/s [ntp]. The oxygen concentration in the system of the pyrolysis apparatus is controlled in a range of 1% by volume or lower. Here, a zirconia type oxygen sensor is used for measurement of the oxygen concentration in the pyrolysis apparatus.

Pyrolysis oil is obtained through a bottom of a dry distillation tower 12a. A first gas fraction is obtained through a top of the dry distillation tower 12a.

The reaction is performed until distillation of the pyrolysis oil is stopped, and after stopping of the distillation, the heat exchanger 1 is stopped, and left to stand and cooled for about 12 hours. Thereafter, a mixture of a residue fraction and a metal fraction is taken out from the pyrolysis furnace. The metal fraction is removed from the mixture by a magnet separator, to obtain the residue fraction. The residue fraction is pulverized to a fine powder having a particle size of 1 mm or lower with a hammer type pulverizer, classified with an air classifier having a rotary blade to remove a coarse powder having a particle size of 50 µm or higher, thereby obtaining a carbide having a particle size of 10 µm or lower and a modal value of 4 µm.

The ratio of each component and characteristics of the pyrolysis oil are as shown in Table 1.

### (2) Low-temperature hydrogenation step

### (2-1) Production of hydrogenation catalyst A-1

A silica-alumina powder having a compositional ratio of 97% by mass of alumina and 3% by mass of silica as oxides is used to prepare a columnar support having a diameter of about 1.6 mm and a length of about 3 mm. Nickel nitrate and ammonium molybdate are dissolved in ionexchange water in an amount corresponding to the amount of water absorption of the support, as measured in advance, to obtain an impregnation solution of nickel nitrate and ammonium molybdate. The support is impregnated with this impregnation solution by an incipient wetness method, to perform supporting so that the Ni content in terms of oxide is 4% by mass and the Mo content in terms of oxide is 20% by mass based on the mass of the support. Next, the resulting impregnated product (catalyst precursor) is dried at 120°C for 3 hours and then fired at 500°C for 1 hour under an air stream, to obtain a hydrogenation catalyst A-1.

### (2-2) Low-temperature hydrogenation treatment

The hydrogenation catalyst A-1 is packed in a reaction tube (inner diameter 20 mm). After sulfurization treatment with oil in which 1% by mass of dimethyl disulfide is dissolved in diesel oil, low-temperature hydrogenation treatment with pyrolysis oil as a raw material is performed in conditions of a reaction pressure of 11 MPaG, a reaction temperature of 180°C, and WHSV = 0.3 h⁻¹, to obtain low-temperature hydrogenated oil. Characteristics of the low-temperature hydrogenated oil are as shown in Table 4.

### (3) Hydrogenolysis step

### (3-1) Production of catalyst B-1

A columnar support having a diameter of about 1.6 mm and a length of about 3 mm is prepared by addition and kneading, and firing with, as oxides, 0.9 kg of a silica-alumina powder of 30% by mass of alumina and 70% by mass of silica, and 0.1 kg of USY zeolite satisfying SiO₂/Al₂O₃ = 30. Nickel nitrate and ammonium tungstate are dissolved in ionexchange water in an amount corresponding to the amount of water absorption of the support, as measured in advance, to obtain an impregnation solution of nickel nitrate and ammonium tungstate. The support is impregnated with this impregnation solution by an incipient wetness method, to perform supporting so that the Ni content in terms of oxide is 10% by mass and the W content in terms of oxide is 20% by mass based on the mass of the support. Next, the resulting impregnated product (catalyst precursor) is dried at 120°C for 3 hours and then fired at 500°C for 1 hour under an air stream, to obtain a hydrogenation catalyst B-1.

### (3-2) Hydrogenolysis

The hydrogenation catalyst A-1 and the hydrogenolysis catalyst B-1 are packed in a reaction tube (inner diameter 20 mm) at a proportion of a weight ratio of 8:2. The packing order is such that the hydrogenation catalyst A-1 is packed in the former stage of the reaction tube and the hydrogenation catalyst B-1 is packed in the latter stage of the reaction tube. After sulfurization treatment with oil in which 1% by mass of dimethyl disulfide is dissolved in diesel oil, hydrogenolysis with low-temperature hydrogenated oil as a raw material is performed in conditions of a reaction pressure of 11 MPaG, a reaction temperature of 390°C, and WHSV = 0.3 h⁻¹, to obtain a second gas fraction and hydrogenolysis oil. The hydrogenolysis oil is fractionally distilled to a light fraction and a heavy fraction, and the ratio between such respective component is determined. The results are shown in Table 6.

### (4) Steam cracking step

A pyrolysis apparatus having a tubular reactor (reaction tube) is used to react the light fraction obtained in the hydrogenolysis step with steam in conditions of a reactor outlet reaction temperature of 790°C, a reaction pressure of 0.15 MPaA, and a reaction tube retention time of 0.25 seconds. A product (product gas, product oil and raw material for carbide production) after the reaction is recovered. The results are shown in Table 8. The 10% distillation temperature of the heavy distillate fraction is adjusted to 190°C or higher.

### (Example 2)

Production of a chemical product is performed in the same manner as in Example 1 except that the pyrolysis temperature in the pyrolysis step is changed to 400°C.

### (Example 3)

Production of a chemical product is performed in the same manner as in Example 1 except that the pyrolysis temperature in the pyrolysis step is changed to 700°C.

### (Example 4)

Production of a chemical product is performed in the same manner as in Example 1 except that the low-temperature hydrogenation step is performed with raw oil (low-boiling point oil 75% by mass, high-boiling point oil 25% by mass) obtained by distilling pyrolysis oil and thus removing 18% by mass of high-boiling point oil. Characteristics of the raw oil used in the low-temperature hydrogenation step are shown in Table 3.

### (Example 5)

Production of a chemical product is performed in the same manner as in Example 1 except that the low-temperature hydrogenation step is performed with raw oil (low-boiling point oil 67% by mass, high-boiling point oil 33% by mass) obtained by distilling pyrolysis oil and thus removing 10% by mass of high-boiling point oil. Characteristics of the raw oil used in the low-temperature hydrogenation step are shown in Table 3.

### (Example 6)

Production of a chemical product is performed in the same manner as in Example 1 except that the pyrolysis step is performed in the presence of a catalyst and the pyrolysis temperature in the pyrolysis step is changed to 350°C. Acid clay is used as the catalyst used in the pyrolysis step.

### (Comparative Example 1)

Production of a chemical product is performed in the same manner as in Example 1 except that the pyrolysis temperature in the pyrolysis step is changed to 300°C.

### (Comparative Example 2)

Production of a chemical product is performed in the same manner as in Example 1 except that the pyrolysis temperature in the pyrolysis step is changed to 800°C.

In Examples 1 to 6 and Comparative Example 2, a powdery carbide suitable for an application such as an additive for rubber, an additive for resins, or a colorant is obtained from the residue fraction in the pyrolysis step. On the contrary, in Comparative Example 1, the rubber component remains in the residue fraction, powder formation is difficult, and a powdery carbide is not obtained.

The results in the pyrolysis step, the low-temperature hydrogenation step, the hydrogenolysis step, and the steam cracking step in Examples 1 to 6 and Comparative Examples 1 to 2 are shown in Tables 1 to 9. The chemical product yield (% by mass) based on the total amount of the pyrolysis product excluding the metal fraction indicates the proportion of the total amount of the chemical product (ethylene, propylene, butadiene, butenes, isoprene, cyclopentadiene, benzene, toluene, xylene, ethylbenzene, styrene, indene, and methylstyrene) based on the total amount of the first gas fraction, the pyrolysis oil and the residue fraction obtained in the pyrolysis step.

As shown in Tables 8 and 9, the yield of the chemical product is low and the chemical product cannot be efficiently produced in Comparative Examples 1 and 2 as compared with Examples 1 to 6.

As shown in Tables 1 and 2, in Comparative Example 1, the yield of powdery carbide is 0% by mass and a carbide cannot be obtained along with production of the chemical product.

**[Table 1]**

| Pyrolysis step | | Example 1 | Example 2 | Example 3 | Example 4 | Example 5 | Example 6 |
|---|---|---|---|---|---|---|---|
| Pyrolysis temperature (°C) | | 500 | 400 | 700 | 500 | 500 | 350 |
| Product ratio | First gas fraction (% by mass) | 15 | 2 | 18 | 15 | 15 | 10 |
| | Pyrolysis oil (% by mass) | 50 | 59 | 48 | 50 | 50 | 55 |
| | Residue fraction (% by mass) | 35 | 39 | 34 | 35 | 35 | 35 |
| Characteristics of pyrolysis oil | IBP (°C) | 90 | 92 | 88 | 90 | 90 | 112 |
| | T10 (°C) | 164 | 163 | 143 | 164 | 164 | 179 |
| | T50 (°C) | 312 | 334 | 297 | 312 | 312 | 351 |
| | T70 (°C) | 384 | 407 | 369 | 384 | 384 | 420 |
| | T90 (°C) | 475 | 500 | 442 | 475 | 475 | 501 |
| | EBP (°C) | 601 | 620 | 590 | 601 | 601 | 632 |
| | Nitrogen fraction (ppm by mass) | 5700 | 5600 | 5700 | 5700 | 5700 | 5600 |
| | Sulfur fraction (ppm by mass) | 8950 | 8700 | 8800 | 8950 | 8950 | 8700 |
| | Chlorine fraction (ppm by mass) | 17 | 17 | 17 | 17 | 17 | 17 |
| | Diene value | 16 | 17 | 12 | 16 | 16 | 14 |
| | Iodine value | 208 | 220 | 160 | 208 | 208 | 180 |
| | Total acid value | 5.5 | 7.9 | 3.1 | 5.5 | 5.5 | 16.8 |
| Yield (% by mass) of powdery carbide | | 35 | 39 | 34 | 35 | 35 | 35 |

**[Table 2]**

| Pyrolysis step | | Comparative Example 1 | Comparative Example 2 |
|---|---|---|---|
| Pyrolysis temperature (°C) | | 300 | 800 |
| Product ratio | First gas fraction (% by mass) | 1 | 23 |
| | Pyrolysis oil (% by mass) | 31 | 41 |
| | Residue fraction (% by mass) | 68 | 36 |
| Characteristics of pyrolysis oil | IBP (°C) | 86 | 94 |
| | T10 (°C) | 160 | 168 |
| | T50 (°C) | 305 | 325 |
| | T70 (°C) | 386 | 390 |
| | T90 (°C) | 481 | 488 |
| | EBP (°C) | 580 | 612 |
| | Nitrogen fraction (ppm by mass) | 3800 | 6100 |
| | Sulfur fraction (ppm by mass) | 8550 | 9400 |
| | Chlorine fraction (ppm by mass) | 64 | 17 |
| | Diene value | 22 | 9 |
| | Iodine value | 287 | 119 |
| | Total acid value | 10.3 | 0.7 |
| Yield (% by mass) of powdery carbide | | 0 | 36 |

**[Table 3]**

| Distillation step (after cutting of high-boiling point fraction) | | Example 4 | Example 5 |
|---|---|---|---|
| Pyrolysis oil (raw oil in low-temperature hydrogenation step) after distillation | | | |
| Characteristics of pyrolysis oil | IBP (°C) | 90 | 90 |
| | T10 (°C) | 158 | 160 |
| | T50 (°C) | 273 | 291 |
| | T70 (°C) | 336 | 359 |
| | T90 (°C) | 396 | 430 |
| | EBP (°C) | 430 | 475 |
| | Nitrogen fraction (ppm by mass) | 5500 | 5500 |
| | Sulfur fraction (ppm by mass) | 7700 | 7800 |
| | Chlorine fraction (ppm by mass) | 38 | 38 |
| | diene value | 16 | 16 |
| | iodine value | 210 | 209 |
| | total acid value | 7.2 | 6.4 |
| Proportion (% by mass) of cutting of high-boiling point oil from pyrolysis oil | | 18 | 10 |

**[Table 4]**

| Low-temperature hydrogenation step | Example 1 | Example 2 | Example 3 | Example 4 | Example 5 | Example 6 |
|---|---|---|---|---|---|---|
| Low-temperature hydrogenation temperature (°C) | 180 | 180 | 180 | 180 | 180 | 180 |
| Nitrogen fraction (ppm by mass) | 5500 | 5400 | 5500 | 5200 | 5300 | 5400 |
| Diene value | 13 | 13 | 9 | 12 | 12 | 12 |
| Iodine value | 155 | 164 | 119 | 127 | 140 | 134 |
| Total acid value | 4.5 | 6.5 | 2.5 | 4.5 | 4.5 | 13.7 |
| Heat exchanger contamination evaluation | ○ | ○ | ○ | ○ | ○ | ○ |
| Width of reduction in temperature (°C) with contamination | 4 | 5 | 3 | 2 | 2 | 5 |

**[Table 5]**

| Low-temperature hydrogenation step | Comparative Example 1 | Comparative Example 2 |
|---|---|---|
| Low-temperature hydrogenation temperature (°C) | 180 | 180 |
| Nitrogen fraction (ppm by mass) | 3700 | 5900 |
| Diene value | 16 | 7 |
| Iodine value | 214 | 89 |
| Total acid value | 8.4 | 0.6 |
| Heat exchanger contamination evaluation | ○ | ○ |
| Width of reduction in temperature (°C) with contamination | 8 | 5 |

**[Table 6]**

| Hydrogenolysis step | | Example 1 | Example 2 | Example 3 | Example 4 | Example 5 | Example 6 |
|---|---|---|---|---|---|---|---|
| Characteristics of raw oil | High-boiling point oil (% by mass) | 38 | 45 | 34 | 24 | 31 | 49 |
| | Low-boiling point oil (% by mass) | 62 | 55 | 66 | 76 | 69 | 51 |
| | Nitrogen fraction (ppm by mass) | 5500 | 5400 | 5500 | 5200 | 5300 | 5400 |
| | Sulfur fraction (ppm by mass) | 8800 | 8500 | 8600 | 8300 | 8500 | 8500 |
| | Chlorine fraction (ppm by mass) | 17 | 17 | 17 | 17 | 17 | 17 |
| Product ratio | Second gas fraction (% by mass) | 5 | 5 | 5 | 6 | 6 | 5 |
| | Light fraction (% by mass) | 82 | 80 | 80 | 87 | 85 | 78 |
| | Heavy fraction (% by mass) | 13 | 15 | 15 | 7 | 9 | 17 |
| Characteristics of light fraction | Nitrogen fraction (ppm by mass) | 17 | 19 | 19 | 16 | 16 | 20 |
| | Sulfur fraction (ppm by mass) | 250 | 270 | 270 | 240 | 240 | 300 |
| | Chlorine fraction (ppm by mass) | 1 | 1 | 1 | 1 | 1 | 1 |

**[Table 7]**

| Hydrogenolysis step | | Comparative Example 1 | Comparative Example 2 |
|---|---|---|---|
| Characteristics of raw oil | High-boiling point oil (% by mass) | 37 | 41 |
| | Low-boiling point oil (% by mass) | 63 | 59 |
| | Nitrogen fraction (ppm by mass) | 3700 | 5900 |
| | Sulfur fraction (ppm by mass) | 8400 | 9200 |
| | Chlorine fraction (ppm by mass) | 63 | 17 |
| Product ratio | Second gas fraction (% by mass) | 5 | 5 |
| | Light fraction (% by mass) | 82 | 79 |
| | Heavy fraction (% by mass) | 13 | 16 |
| Characteristics of light fraction | Nitrogen fraction (ppm by mass) | 11 | 26 |
| | Sulfur fraction (ppm by mass) | 230 | 280 |
| | Chlorine fraction (ppm by mass) | 4 | 1 |

**[Table 8]**

| Steam cracking step | | Example 1 | Example 2 | Example 3 | Example 4 | Example 5 | Example 6 |
|---|---|---|---|---|---|---|---|
| Product ratio (% by mass) | Ethylene | 18 | 18 | 18 | 18 | 18 | 17 |
| | Propylene | 11 | 11 | 11 | 12 | 12 | 11 |
| | Butadiene, butenes | 8 | 8 | 8 | 8 | 8 | 8 |
| | Isoprene, cyclopentadiene | 3 | 3 | 3 | 3 | 3 | 3 |
| | Benzene, toluene, xylene, Ethylbenzene, styrene | 18 | 18 | 18 | 17 | 17 | 18 |
| | Indene, methylstyrene | 4 | 4 | 4 | 4 | 4 | 4 |
| | Heavy distillate fraction | 17 | 17 | 17 | 16 | 16 | 17 |
| | Light distillate fraction | 21 | 21 | 21 | 22 | 22 | 21 |
| Chemical product ratio (% by mass) based on total amount of pyrolysis product excluding metal fraction | | 25 | 29 | 24 | 22 | 24 | 26 |
| Ratio of raw material for carbide production (% by mass) based on total amount of pyrolysis product excluding metal fraction | | 7 | 8 | 7 | 6 | 6 | 7 |

**[Table 9]**

| Steam cracking step | | Comparative Example 1 | Comparative Example 2 |
|---|---|---|---|
| Product ratio (% by mass) | Ethylene | 18 | 18 |
| | Propylene | 11 | 11 |
| | Butadiene, butenes | 8 | 8 |
| | Isoprene, cyclopentadiene | 3 | 3 |
| | Benzene, toluene, xylene, Ethylbenzene, styrene | 18 | 18 |
| | Indene, methylstyrene | 4 | 4 |
| | Heavy distillate fraction | 17 | 17 |
| | Light distillate fraction | 21 | 21 |
| Chemical product ratio (% by mass) based on total amount of pyrolysis product excluding metal fraction | | 16 | 20 |
| Ratio of raw material for carbide production (% by mass) based on total amount of pyrolysis product excluding metal fraction | | 4 | 6 |

### (Comparative Example 3)

Production of a chemical product is performed in the same manner as in Example 1 except that hydrogenolysis treatment is performed in the hydrogen decomposition step with the pyrolysis oil obtained in the pyrolysis step as raw oil, not through the low-temperature hydrogenation step.

### (Comparative Example 4)

Production of a chemical product is performed in the same manner as in Example 1 except that the low-temperature hydrogenation treatment temperature in the low-temperature hydrogenation step is changed to 150°C.

### (Example 7)

Production of a chemical product is performed in the same manner as in Example 1 except that the low-temperature hydrogenation treatment temperature in the low-temperature hydrogenation step is changed to 190°C.

### (Example 8)

Production of a chemical product is performed in the same manner as in Example 1 except that the low-temperature hydrogenation treatment temperature in the low-temperature hydrogenation step is changed to 200°C.

### (Example 9)

Production of a chemical product is performed in the same manner as in Example 1 except that the low-temperature hydrogenation treatment temperature in the low-temperature hydrogenation step is changed to 210°C.

### (Example 10)

Production of a chemical product is performed in the same manner as in Example 1 except that the low-temperature hydrogenation treatment temperature in the low-temperature hydrogenation step is changed to 250°C.

### (Example 11)

Production of a chemical product is performed in the same manner as in Example 1 except that the low-temperature hydrogenation treatment temperature in the low-temperature hydrogenation step is changed to 300°C.

The results in the low-temperature hydrogenation step, the hydrogenolysis step, and the steam cracking step in Comparative Examples 3 and 4, and Examples 7 to 11 are shown in Tables 10 to 12. The results of Example 1 are described together for reference.

**[Table 10]**

| Low-temperature hydrogenation step | Comparative Example 3 | Comparative Example 4 | Example 1 | Example 7 | Example 8 | Example 9 | Example 10 | Example 11 |
|---|---|---|---|---|---|---|---|---|
| Low-temperature hydrogenation temperature (°C) | - | 150 | 180 | 190 | 200 | 210 | 250 | 300 |
| Nitrogen fraction (ppm by mass) | 5700 | 5600 | 5500 | 5400 | 5300 | 5200 | 4500 | 2500 |
| Diene value | 16 | 14 | 13 | 12 | 12 | 11 | 8 | 4 |
| Iodine value | 208 | 171 | 155 | 150 | 145 | 140 | 110 | 58 |
| Total acid value | 5.5 | 5.2 | 4.5 | 4.0 | 3.0 | 2.8 | 1.3 | 0.3 |
| Heat exchanger contamination evaluation | × | × | ○ | ○ | ○ | ○ | ○ | ○ |
| Width of reduction in temperature (°C) with contamination | 10 | 10 | 4 | 4 | 3 | 3 | 3 | 2 |

**[Table 11]**

| Hydrogenolysis step | | Comparative Example 3 | Comparative Example 4 | Example 1 | Example 7 | Example 8 | Example 9 | Example 10 | Example 11 |
|---|---|---|---|---|---|---|---|---|---|
| Characteristics of raw oil | High-boiling point Oil material (% by mass) | 39 | 38 | 38 | 38 | 38 | 38 | 38 | 37 |
| | Low-boiling point oil material (% by mass) | 61 | 62 | 62 | 62 | 62 | 62 | 62 | 63 |
| | Nitrogen fraction (ppm by mass) | 5700 | 5600 | 5500 | 5400 | 5300 | 5200 | 4500 | 2500 |
| | Sulfur fraction (ppm by mass) | 8950 | 8900 | 8800 | 8700 | 8600 | 8300 | 6600 | 3000 |
| | Chlorine fraction (ppm by mass) | 17 | 17 | 17 | 16 | 16 | 15 | 10 | 2 |
| Product ratio | Second gas fraction (% by mass) | 5 | 5 | 5 | 5 | 5 | 5 | 5 | 5 |
| | Light fraction (% by mass) | 81 | 82 | 82 | 82 | 82 | 83 | 83 | 84 |
| | Heavy fraction (% by mass) | 14 | 13 | 13 | 13 | 13 | 12 | 12 | 11 |
| Characteristics of light fraction | Nitrogen fraction (ppm by mass) | 17 | 17 | 17 | 17 | 17 | 17 | 17 | 17 |
| | Sulfur fraction (ppm by mass) | 250 | 250 | 250 | 250 | 250 | 240 | 240 | 230 |
| | Chlorine fraction (ppm by mass) | 1 | 1 | 1 | 1 | 1 | 1 | 1 | 1 |

**[Table 12]**

| Steam cracking step | | Comparative Example 3 | Comparative Example 4 | Example 1 | Example 7 | Example 8 | Example 9 | Example 10 | Example 11 |
|---|---|---|---|---|---|---|---|---|---|
| Product ratio (% by mass) | Ethylene | 18 | 18 | 18 | 18 | 18 | 18 | 18 | 19 |
| | Propylene | 11 | 11 | 11 | 11 | 11 | 11 | 11 | 11 |
| | Butadiene, butenes | 8 | 8 | 8 | 8 | 8 | 8 | 8 | 8 |
| | Isoprene, cyclopentadiene | 3 | 3 | 3 | 3 | 3 | 3 | 3 | 3 |
| | Benzene, toluene, xylene, Ethylbenzene, styrene | 18 | 18 | 18 | 18 | 18 | 18 | 18 | 18 |
| | Indene, methylstyrene | 4 | 4 | 4 | 4 | 4 | 4 | 4 | 4 |
| | Heavy distillate fraction | 17 | 17 | 17 | 17 | 18 | 18 | 18 | 17 |
| | Light distillate fraction | 21 | 21 | 21 | 21 | 20 | 20 | 20 | 20 |
| Chemical product ratio (% by mass) based on total amount of pyrolysis product excluding metal fraction | | 25 | 25 | 25 | 25 | 25 | 26 | 26 | 26 |
| Ratio of raw material for carbide production (% by mass) based on total amount of pyrolysis product excluding metal fraction | | 7 | 7 | 7 | 7 | 7 | 7 | 7 | 7 |

### (Example 12)

Production of a chemical product is performed in the same manner as in Example 1 except that low-temperature hydrogenation treatment is performed in the low-temperature hydrogenation step with raw oil including 50% by mass of the pyrolysis oil obtained in the pyrolysis step and 50% by mass of recycled oil including hydrogenolysis oil (light fraction and heavy fraction) obtained in the hydrogenolysis step.

### (Example 13)

Production of a chemical product is performed in the same manner as in Example 1 except that low-temperature hydrogenation treatment is performed in the low-temperature hydrogenation step with raw oil including 20% by mass of the pyrolysis oil obtained in the pyrolysis step and 80% by mass of recycled oil including hydrogenolysis oil (light fraction and heavy fraction) obtained in the hydrogenolysis step.

The results in the low-temperature hydrogenation step, the hydrogenolysis step, and the steam cracking step in Examples 12 and 13 are shown in Tables 13 to 15.

**[Table 13]**

| Low-temperature hydrogenation step | Example 12 | Example 13 |
|---|---|---|
| Low-temperature hydrogenation temperature (°C) | 180 | 180 |
| Nitrogen fraction (ppm by mass) | 2800 | 1100 |
| Diene value | 7 | 3 |
| Iodine value | 81 | 36 |
| Total acid value | 2.4 | 1.1 |
| Heat exchanger contamination evaluation | ○ | ○ |
| Width of reduction in temperature (°C) with contamination | 3 | 2 |

**[Table 14]**

| Hydrogenolysis step | | Example 12 | Example 13 |
|---|---|---|---|
| Characteristics of raw oil | High-boiling point oil (% by mass) | 26 | 19 |
| | Low-boiling point oil (% by mass) | 74 | 81 |
| | Nitrogen fraction (ppm by mass) | 2800 | 1100 |
| | Sulfur fraction (ppm by mass) | 4500 | 2000 |
| | Chlorine fraction (ppm by mass) | 9 | 4 |
| Product ratio | Second gas fraction (% by mass) | 4 | 4 |
| | Light fraction (% by mass) | 84 | 84 |
| | Heavy fraction (% by mass) | 12 | 12 |
| Characteristics of light fraction | Nitrogen fraction (ppm by mass) | 15 | 14 |
| | Sulfur fraction (ppm by mass) | 230 | 200 |
| | Chlorine fraction (ppm by mass) | 0 | 0 |

**[Table 15]**

| Steam cracking step | | Example 12 | Example 13 |
|---|---|---|---|
| Product ratio (% by mass) | Ethylene | 18 | 18 |
| | Propylene | 12 | 12 |
| | Butadiene, butenes | 8 | 8 |
| | Isoprene, cyclopentadiene | 3 | 3 |
| | Benzene, toluene, xylene, ethylbenzene, styrene | 17 | 17 |
| | Indene, methylstyrene | 4 | 4 |
| | Heavy distillate fraction | 15 | 16 |
| | Light distillate fraction | 23 | 22 |
| Chemical product ratio (% by mass) based on total amount of pyrolysis product excluding metal fraction | | 26 | 27 |
| Ratio (% by mass) of raw material for carbide production based on total amount of pyrolysis product excluding metal fraction | | 6 | 6 |

### (Example 14)

Production of a chemical product is performed in the same manner as in Example 4 except that low-temperature hydrogenation treatment is performed in the low-temperature hydrogenation step with raw oil including 50% by mass of raw oil obtained by distilling pyrolysis oil and thus removing 18% by mass of high-boiling point oil and 50% by mass of recycled oil including hydrogenolysis oil (light fraction and heavy fraction) obtained in the hydrogenolysis step.

### (Example 15)

Production of a chemical product is performed in the same manner as in Example 5 except that low-temperature hydrogenation treatment is performed in the low-temperature hydrogenation step with raw oil including 20% by mass of raw oil obtained by distilling pyrolysis oil and thus removing 10% by mass of high-boiling point oil and 80% by mass of recycled oil including hydrogenolysis oil (light fraction and heavy fraction) obtained in the hydrogenolysis step.

The results in the low-temperature hydrogenation step, the hydrogenolysis step, and the steam cracking step in Examples 14 and 15 are shown in Tables 16 to 18.

**[Table 16]**

| Low-temperature hydrogenation step | Example 14 | Example 15 |
|---|---|---|
| Low-temperature hydrogenation temperature (°C) | 180 | 180 |
| Nitrogen fraction (ppm by mass) | 2600 | 1100 |
| Diene value | 6 | 3 |
| Iodine value | 66 | 32 |
| Total acid value | 2.3 | 1.1 |
| Heat exchanger contamination evaluation | ○ | ○ |
| Width of reduction in temperature (°C) with contamination | 2 | 2 |

**[Table 17]**

| Hydrogenolysis step | | Example 14 | Example 15 |
|---|---|---|---|
| Characteristics of raw oil | High-boiling point oil (% by mass) | 16 | 14 |
| | Low-boiling point oil (% by mass) | 84 | 86 |
| | Nitrogen fraction (ppm by mass) | 2600 | 1100 |
| | Sulfur fraction (ppm by mass) | 4300 | 1900 |
| | Chlorine fraction (ppm by mass) | 9 | 4 |
| Product ratio | Second gas fraction (% by mass) | 5 | 5 |
| | Light fraction (% by mass) | 88 | 88 |
| | Heavy fraction (% by mass) | 7 | 7 |
| Characteristics of light fraction | Nitrogen fraction (ppm by mass) | 14 | 13 |
| | Sulfur fraction (ppm by mass) | 220 | 190 |
| | Chlorine fraction (ppm by mass) | 0 | 0 |

**[Table 18]**

| Steam cracking step | | Example 14 | Example 15 |
|---|---|---|---|
| Product ratio (% by mass) | Ethylene | 18 | 17 |
| | Propylene | 12 | 12 |
| | Butadiene, butenes | 8 | 8 |
| | Isoprene, cyclopentadiene | 3 | 3 |
| | Benzene, toluene, xylene, ethylbenzene, styrene | 17 | 18 |
| | Indene, methylstyrene | 4 | 4 |
| | Heavy distillate fraction | 15 | 15 |
| | Light distillate fraction | 23 | 23 |
| Chemical product ratio (% by mass) based on total amount of pyrolysis product excluding metal fraction | | 22 | 25 |
| Ratio (% by mass) of proportion of raw material for carbide production based on total amount of pyrolysis product excluding metal fraction | | 5 | 6 |

It is confirmed from Examples described above that an excellent chemical product yield can be realized and also a carbide is efficiently obtained by the present invention.

### Reference Signs List

1 ... heat exchanger, 2 ... pyrolysis furnace, 3 ... oxygen-free gas-feeding source, 4 ... circulation path, 5 ... oil fraction recovery apparatus, 6 ... used tires, 7 ... decomposition apparatus, 8 ... external heating tool, 9 ... flow meter, 10 ... damper, 11 ... air blower, 12 ... dry distillation tower, 13 ... recovery tank, 14 ... hot-air furnace, 15 ... exhauster, 16 ... waste gas treatment apparatus, 100 ... system, 110 ... pyrolysis unit, 111 ... first separation unit, 112 ... pulverization unit, 115 ... low-temperature hydrogenation unit, 120 ... hydrogenolysis unit, 121 ... second separation unit, 130 ... steam cracker, 140 ... carbide production unit, S1 ... waste material, S2 ... first gas fraction, S3 ... pyrolysis oil, S4 ... mixture of residue fraction and metal fraction, S5 ... residue fraction, S6 ... metal fraction, S7 ... powdery carbide, S8 ... low-temperature hydrogenated oil, S9 ... second gas fraction, S10 ... hydrogenolysis oil, S11 ... light fraction, S12 ... heavy fraction, S13 ... product gas, S14 ... product oil, S15 ... heavy distillate fraction, S16 ... carbide, S17 ... recycled oil (light fraction + heavy fraction), 60 ... measurement apparatus of heat exchanger contamination evaluation, 61 ... test piece, 62 ... inlet, 63 ... outlet

## Claims

1. A method for producing a chemical product and a carbide, the method comprising:
a pyrolysis step of obtaining a first gas fraction, pyrolysis oil, and a residue fraction through pyrolysis of a crushed product of used tires;
a carbide recovery step of recovering carbide from the residue fraction;
a low-temperature hydrogenation step of subjecting raw oil containing at least one portion of the pyrolysis oil to low-temperature hydrotreatment at 180°C or higher and 350°C or lower, to obtain low-temperature hydrogenated oil;
a hydrogenolysis step of subjecting raw oil containing at least one of the low-temperature hydrogenated oil to hydrogenolysis treatment at a higher temperature than that in the low-temperature hydrotreatment, to obtain a second gas fraction, a light fraction having a boiling point of 350°C or lower, and a heavy fraction having a boiling point of higher than 350°C; and
a steam cracking step of obtaining a chemical product, and a raw material for carbide production, containing a heavy distillate fraction having a 10% distillation temperature of 190°C or higher, by steam cracking of steam cracking raw oil containing at least one portion of the light fraction, wherein
a pyrolysis temperature of the pyrolysis is 350°C or higher and 750°C or lower.

2. The production method according to claim 1, wherein an amount of the first gas fraction based on a total amount of the first gas fraction, the pyrolysis oil and the residue fraction is 25% by mass or lower in the pyrolysis step.

3. The production method according to claim 1, wherein an amount of the pyrolysis oil based on a total amount of the first gas fraction, the pyrolysis oil and the residue fraction is 40% by mass or higher in the pyrolysis step.

4. The production method according to claim 1, wherein the pyrolysis oil has a 10% distillation temperature of 90°C or higher and a 90% distillation temperature of 350°C or higher.

5. The production method according to claim 1, wherein the raw oil in the hydrogenolysis step contains at least one portion of the pyrolysis oil or one portion of a distillate fraction obtained by fractionally distilling the pyrolysis oil.

6. The production method according to claim 1, wherein the pyrolysis oil is used as one portion of raw oil in the low-temperature hydrogenation step after removal of at least one portion of high-boiling point oil having a boiling point of higher than 350°C by distillation.

7. The production method according to claim 1, wherein, in the hydrogenolysis step, the raw oil contains low-boiling point oil having a boiling point of 350°C or lower and high-boiling point oil having a boiling point of higher than 350°C and a content of the high-boiling point oil is 50% by mass or lower based on a total amount of the raw oil.

8. The production method according to claim 1, wherein recycled oil containing at least one portion of the light fraction and the heavy fraction obtained in the hydrogenolysis step is used as one portion of raw oil in the low-temperature hydrogenation step.

9. The production method according to claim 8, wherein an amount of the recycled oil based on a total amount of the recycled oil and the pyrolysis oil in the raw oil is 10% by mass or higher and 99% by mass or lower in the low-temperature hydrogenation step.

10. The production method according to claim 1, wherein the hydrogenolysis step is a step of hydrogenolyzing the raw oil in the presence of a hydrogenolysis catalyst.

11. The production method according to claim 10, wherein the hydrogenolysis catalyst contains a Ni-based catalyst.

12. The production method according to claim 1, wherein, in the hydrogenolysis step, a nitrogen fraction in the raw oil is 2000 ppm by mass or higher and a nitrogen fraction in the light fraction is 25 ppm by mass or lower.

13. The production method according to claim 1, wherein a diene value of the low-temperature hydrogenated oil is lower than 13.0 gI₂/100 g.

14. The production method according to claim 1, wherein an iodine value of the low-temperature hydrogenated oil is lower than 160 gI₂/100 g.

15. The production method according to claim 1, wherein a total acid value of the low-temperature hydrogenated oil is lower than 5.0 mgKOH/g.

16. The production method according to claim 1, wherein the chemical product is at least one selected from the group consisting of ethylene, propylene, butadiene, butenes, isoprene, benzene, toluene, xylene, ethylbenzene, styrene, cyclopentadiene, dicyclopentadiene, indene, and methylstyrene.

17. The production method according to any one of claims 1 to 16, further comprising a carbide production step of obtaining a carbide through pyrolysis or incomplete combustion of the raw material for carbide production.

18. A method for producing synthetic rubber, the method comprising a polymerization step of obtaining synthetic rubber by a polymerization reaction in which butadiene obtained by the production method according to claim 16 is used as at least one portion of a raw material of the synthetic rubber.

19. A tire comprising synthetic rubber obtained by the production method according to claim 18.

20. A method for producing a tire, the method comprising a vulcanization step of obtaining a tire by a vulcanization reaction in which synthetic rubber obtained by the production method according to claim 18 is used as at least one portion of a raw material of the tire.

21. A method for managing a chemical product, to be executed with a management apparatus, for use in the production of a chemical product with used tires, wherein
the management method is a method for assigning a value as a renewable product with a mass balance system, to the chemical product, with the management apparatus depending on a content rate of a renewable raw material contained in the used tires,
the management method comprises a step (V) of confirming that the chemical product is obtained,
the step (V) comprises the following step (V-1), the following step (V-2), the following step (V-3), the following step (V-4), and the following step (V-5),
the step (V-1) is a step of confirming that pyrolysis oil is produced from the used tires loaded to a pyrolysis unit in which the pyrolysis oil is obtained by subjecting the used tires to pyrolysis processing at 350°C or higher and 750°C or lower,
the step (V-2) is a step of confirming that low-temperature hydrogenated oil is produced from the pyrolysis oil loaded to a low-temperature hydrogenation unit in which raw oil containing at least one portion of the pyrolysis oil is subjected to low-temperature hydrotreatment at 180°C or higher and 350°C or lower to obtain the low-temperature hydrogenated oil,
the step (V-3) is a step of confirming that a light fraction having a boiling point of 350°C or lower is produced from the low-temperature hydrogenated oil loaded to a hydrogenolysis unit in which raw oil containing at least one portion of the low-temperature hydrogenated oil is subjected to hydrogenolysis treatment at a higher temperature than that in the low-temperature hydrotreatment to obtain the light fraction,
the step (V-4) is a step of confirming that the chemical product is obtained from the light fraction loaded to a steam cracker in which steam cracking raw oil containing at least one portion of the light fraction is subjected to steam cracking treatment, and
the step (V-5) is a step of confirming that the chemical product is obtained from the used tires by treatment in the order of the pyrolysis unit, the low-temperature hydrogenation unit, the hydrogenolysis unit, and the steam cracker,
the management method comprises a step (Z) of confirming a proportion of a product to which a value as a renewable product is assigned,
the step (Z) comprises the following step (Z-1), the following step (Z-2), the following step (Z-3), and the following step (Z-4),
the step (Z-1) is a step of selecting a product to be assigned as a renewable product in a product obtained by the steam cracker,
the step (Z-2) is a step of determining a value of proportion (P) to be assigned as a renewable product in a proportion of the product selected in the step (Z-1) relative to the product obtained by the steam cracker,
the step (Z-3) is a step of grasping a value of content rate (Q) of a renewable raw material contained in the used tires, and
the step (Z-4) is a step of confirming that the value of proportion (P) is equal to or lower than the value of content rate (Q) by comparing the value of proportion (P) and the value of content rate (Q).

22. A management apparatus comprising a computer-readable storage medium storing a management program, wherein
the management apparatus executes the management program to execute the management method according to claim 21.

23. The management apparatus according to claim 22, wherein the management apparatus executes the management method and then outputs a result which is acquired by the management method and in which a value as a renewable product relative to a product selected depending on a content rate of a renewable raw material contained in used tires is assigned.

24. A computer-readable storage medium storing a computer program, wherein
the storage medium stores a management program which allows a computer to execute the management method according to claim 21.

25. A management program for allowing a computer to execute the management method according to claim 21.
